# EUROPEAN PATENT SPECIFICATION

(11) **EP 3 571 684 B1**
(45) Date of publication and mention of the grant of the patent: **21.07.2021**
(21) Application number: 17898098.3
(22) Date of filing: 27.09.2017
(51) Int. Cl.: G01C 21/34, G01C 21/36, G08G 1/00, G08G 1/0968, G06Q 10/02, G06Q 50/30, G06Q 10/04

(54) **SYSTEMS AND METHODS FOR PROVIDING A NAVIGATION ROUTE**
SYSTEME UND VERFAHREN ZUR BEREITSTELLUNG EINER NAVIGATIONSROUTE
SYSTÈMES ET PROCÉDÉS DE FOURNITURE D'UN ITINÉRAIRE DE NAVIGATION

(30) Priority: 24.02.2017 CN 201710104213; 24.04.2017 CN 201710270193
(43) Date of publication of application: 27.11.2019
(73) Proprietor: Beijing Didi Infinity Technology And Development Co., Ltd., Beijing 100193 (CN)
(72) Inventor: LIU, Bo, Beijing 100193 (CN); ZHAO, Wei, Beijing 100193 (CN)
(74) Representative: Wang, Bo
(86) International application number: PCT/CN2017/103828
(87) International publication number: WO 2018/153093

(56) References cited:
- CN-A- 102 855 756
- CN-A- 102 867 410
- CN-A- 106 128 091
- CN-A- 107 091 645
- US-A1- 2002 052 751
- US-A1- 2014 074 757
- US-A1- 2015 046 080
- US-A1- 2016 138 928
- US-A1- 2016 334 797

## Description

### CROSS-REFERENCE TO RELATED APPLICATIONS

This application claims priority of Chinese Patent Application No. 201710104213.2 filed on February 24, 2017, and Chinese Patent Application No. 201710270193.6 filed on April 24, 2017.

### TECHNICAL FIELD

The present disclosure generally relates to systems and methods for providing on-demand services, and in particular, to systems and methods for providing a navigation route.

### BACKGROUND

On-demand transportation services, especially online car hailing services have become more and more popular. After a service requester (e.g., a passenger) requests a car via an online car hailing service platform using a terminal device, a service provider (e.g., a driver) who provides car services will pick up the service requestor at a location provided by the service requestor. However, as the information related to the pickup location or the navigation route may be inaccurate, the driver may go a wrong way and re-routed. The passenger may have to wait longer than expected time before the drive arrives at the pickup location. Accordingly, it is desirable to provide systems and methods for providing more accurate information related to the navigation route so as to achieve more satisfying user experience.

Document US 2002/052751 A1 discloses a transportation service system and a method of providing a transportation service, which has a function to select an optimal route and to calculate a charge for the route associated with the transportation service provided by a taxi.

### SUMMARY

According to an aspect of the present disclosure, the invention relates to a system according to claim 1.

In some embodiments, to obtain a candidate navigation route determined by the service requestor, the system may further be directed to generate a first prompt of selection instruction. The system may further be directed to send the first prompt to the service requestor. The system may further be directed to obtain determination information related to the determined candidate navigation route selected by the service requestor.

In some embodiments, the system is further directed to: send a second prompt of wait instruction to the service provider before obtaining the determination information of the service requestor.

In some embodiments, to obtain a candidate navigation route determined by the service requestor, the system may further be directed to: analyze the candidate navigation route determined by the service requestor. The system may further be directed to determine whether the candidate navigation route matches one of the one or more candidate navigation routes. The system may further be directed to transmit the one or more candidate navigation routes to the service provider in response to a determination that the candidate navigation route matches none of the one or more candidate navigation routes.

In some embodiments, the system may further be directed to obtain a modification request relating to the destination from the service requestor. The system may further be directed to determine a modified destination based on the modification request. The system may further be directed to change the destination to the modified destination.

In some embodiments, the system may further be directed to: obtain a present location of the service requestor. The system may further be directed to generate information associated with the service order based on the modified destination and the present location.

In some embodiments, the information associated with the service order may include at least one of: a remaining route from a present location of the service requestor to the modified destination associated with the service order, an estimated distance from the present location of the service requestor to the modified destination, an estimated time from the present location to the modified destination, an estimated price of the remaining route, or at least one suggested navigation route between the present location and the modified destination.

In some embodiments, the system is further directed to: send a third prompt of modification instruction to the service requestor or the service provider, wherein the third prompt comprises the modified destination.

According to another aspect of the present disclosure, the invention relates to a method according to claim 9.

In some embodiments, the obtaining a candidate navigation route determined by the service requestor may further include generating a first prompt of selection instruction. The method may further include sending the first prompt to the service requestor. The method may further include obtaining determination information related to the determined candidate navigation route selected by the service requestor.

In some embodiments, the method may further include: sending a second prompt of wait instruction to the service provider before obtaining the determination information of the service requestor.

In some embodiments, the obtaining a candidate navigation route determined by the service requestor may further include analyzing the candidate navigation route determined by the service requestor. The method may further include determining whether the candidate navigation route matches one of the one or more candidate navigation routes. The method may further include transmitting the one or more candidate navigation routes to the service provider in response to a determination that the candidate navigation route matches none of the one or more candidate navigation routes.

In some embodiments, the method may further include obtaining a modification request relating to the destination from the service requestor. The method may further include determining a modified destination based on the modification request. The method may further include changing the destination to the modified destination.

In some embodiments, the method may further include obtaining a present location of the service requestor. The method may further include generating information associated with the service order based on the modified destination and the present location.

In some embodiments, the information associated with the service order may include at least one of: a remaining route from a present location of the service requestor to the modified destination associated with the service order, an estimated distance from the present location of the service requestor to the modified destination, an estimated time from the present location to the modified destination, an estimated price of the remaining route, or at least one suggested navigation route between the present location and the modified destination.

In some embodiments, the method may further include: sending a third prompt of modification instruction to the service requestor or the service provider, wherein the third prompt comprises the modified destination.

According to still another aspect of the present disclosure, the invention relates to a computer-readable storage medium according to claim 13.

According to still another aspect of the present disclosure, an electronic device may include at least one storage medium including a set of instructions, and at least one processor in communicate with the at least one storage medium, wherein when executing the set of instructions, the electronic device is directed to send a service order from a service requestor to a server, the service order including a departure location. The instructions may also direct the electronic device to receive one or more candidate navigation routes between the departure location and a location of a service provider that is determined to receive the service order. The instructions may also direct the electronic device to determine a candidate navigation route from the one or more candidate navigation routes to the service requestor. The instructions may further direct the electronic device to send the determined candidate navigation route to the server.

In some embodiments, the instructions may further direct the electronic device to receive a first prompt of selection instruction from the server. The instructions may further direct the electronic device to generate a determination information related to the determined candidate navigation route selected by the service requestor. The instructions may further direct the electronic device to send the determination information to the server.

In some embodiments, the service order includes a destination, and the instructions may further direct the electronic device to receive a modification request relating to the destination from the service requestor. The instructions may further direct the electronic device to output a modification message to the service requestor. The instructions may further direct the electronic device to receive a modified destination from the service requestor. The instructions may further direct the electronic device to change the destination to the modified destination. The instructions may further direct the electronic device to send the modification request to the server.

In some embodiments, the instructions may further direct the electronic device to receive information associated with the service order from the server.

In some embodiments, to output a modification message to the service requestor, the instructions may further direct the electronic device to determine the service order satisfies one or more conditions.

In some embodiments, the one or more conditions may include at least one of: a condition that modification times of the destination is no greater than a predetermined value, or a condition that the electronic device does not receive a prohibit instruction that prevent the modification of the destination from the server.

According to still another aspect of the present disclosure, a method for providing information for an on-demand service implemented on at least one electronic device each of which has at least one processor and storage. The method may include sending a service order from a service requestor to a server, the service order including a departure location. The method may also include receiving one or more candidate navigation routes between the departure location and a location of a service provider that is determined to receive the service order. The method may also include determining a candidate navigation route from the one or more candidate navigation routes to the service requestor. The method may further include sending the determined candidate navigation route to the server.

In some embodiments, the method may further include receiving a first prompt of selection instruction from the server. The method may further include generating a determination information related to the determined candidate navigation route selected by the service requestor. The method may further include sending the determination information to the server.

In some embodiments, the service order includes a destination, and the method may further include receiving a modification request relating to the destination from the service requestor. The method may further include outputting a modification message to the service requestor. The method may further include receiving a modified destination from the service requestor through the modification message. The method may further include changing the destination by the modified destination. The method may further include sending the modification request to the server.

In some embodiments, the method may further include: receiving information associated with the service order from the server.

In some embodiments, the outputting a modification message to the service requestor may further include: determining the service order satisfies one or more conditions.

In some embodiments, the one or more conditions may include at least one of: a condition that modification times of the destination is no greater than a predetermined value, or the electronic device does not receive a prohibit instruction that prevent the modification of the destination from the server.

Additional features will be set forth in part in the description which follows, and in part will become apparent to those skilled in the art upon examination of the following and the accompanying drawings or may be learned by production or operation of the examples. The features of the present disclosure may be realized and attained by practice or use of various aspects of the methodologies, instrumentalities and combinations set forth in the detailed examples discussed below.

### BRIEF DESCRIPTION OF THE DRAWINGS

The present disclosure is further described in terms of exemplary embodiments. The foregoing and other aspects of embodiments of present disclosure are made more evident in the following detail description, when read in conjunction with the attached drawing figures, and wherein:
FIG. 1 is a schematic diagram illustrating an exemplary on-demand service system according to some embodiments of the present disclosure;
FIG. 2 is a schematic diagram illustrating exemplary hardware and/or software components of a computing device according to some embodiments of the present disclosure;
FIG. 3 is schematic diagram illustrating exemplary hardware and/or software components of a mobile device according to some embodiments of the present disclosure;
FIG. 4 is a block diagram illustrating an exemplary processing engine according to some embodiments of the present disclosure;
FIG. 5 is a block diagram illustrating an exemplary navigation route determination module according to some embodiments of the present disclosure;
FIG. 6 is a block diagram illustrating an exemplary service order modification module according to some embodiments of the present disclosure;
FIG. 7 is a flowchart illustrating an exemplary process for providing a navigation route according to some embodiments of the present disclosure;
FIG. 8 is a flowchart illustrating an exemplary process for modifying the destination of a service order according to some embodiments of the present disclosure;
FIG. 9 is a block diagram illustrating an exemplary requestor terminal according to some embodiments of the present disclosure;
FIG. 10 is a flowchart illustrating an exemplary process for determining a navigation route according to some embodiments of the present disclosure;
FIG. 11 is a flowchart illustrating an exemplary process for providing determination information associated with a navigation route according to some embodiments of the present disclosure;
FIG. 12 is a flowchart illustrating an exemplary process for modifying the destination of a service order according to some embodiments of the present disclosure; and
FIG. 13 is a flowchart illustrating an exemplary process and/or method for modifying the destination of a service order according to some embodiments of the present disclosure.

### DETAILED DESCRIPTION

The following description is presented to enable any person skilled in the art to make and use the present disclosure, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present disclosure is not limited to the embodiments shown, but is to be accorded the widest scope consistent with the claims.

The terminology used herein is for the purpose of describing particular example embodiments only and is not intended to be limiting. As used herein, the singular forms "a," "an," and "the" may be intended to include the plural forms as well, unless the context clearly indicates otherwise. It will be further understood that the terms "comprises," "comprising," "includes," and/or "including" when used in this specification, specify the presence of stated features, integers, steps, operations, elements, and/or components, but do not preclude the presence or addition of one or more other features, integers, steps, operations, elements, components, and/or groups thereof.

These and other features, and characteristics of the present disclosure, as well as the methods of operation and functions of the related elements of structure and the combination of parts and economies of manufacture, may become more apparent upon consideration of the following description with reference to the accompanying drawing(s), all of which form a part of this specification. It is to be expressly understood, however, that the drawing(s) are for the purpose of illustration and description only and are not intended to limit the scope of the present disclosure. It is understood that the drawings are not to scale.

The flowcharts used in the present disclosure illustrate operations that systems implemented according to some embodiments of the present disclosure. It is to be expressly understood, the operations of the flowcharts may be implemented not in order. Conversely, the operations may be implemented in inverted order or simultaneously. Moreover, one or more other operations may be added to the flowcharts. One or more operations may be removed from the flowcharts.

It should be noted that the online on-demand service is a newly emerged service rooted in post-Internet era. It provides the technical solutions to service requesters that could raise in post-Internet era. In pre-Internet era, it is impossible to provider navigation route based on a service order and/or a location of a service provider. Therefore, the present solution is deeply rooted in and aimed to solve a problem only occurred in post-Internet era.

Moreover, while the system or method in the present disclosure is described primarily in regard to online car hailing services, it should also be understood that this is only one exemplary embodiment. The system or method of the present disclosure may be applied to any other kind of on-demand service. For example, the system or method of the present disclosure may be applied to different transportation systems including land, ocean, aerospace, or the like, or any combination thereof. The vehicle of the transportation systems may include a taxi, a private car, a hitch, a bus, a train, a bullet train, a high speed rail, a subway, a vessel, an aircraft, a spaceship, a hot-air balloon, a driverless vehicle, or the like, or any combination thereof. The transportation system may also include any transportation system that applies management and/or distribution, for example, a system for sending and/or receiving an express. The application scenarios of the system or method of the present disclosure may include a webpage, a plug-in of a browser, a client terminal, a custom system, an internal analysis system, an artificial intelligence robot, or the like, or any combination thereof.

The term "passenger," "requestor," "service requestor," and "customer" in the present disclosure are used interchangeably to refer to an individual, an entity or a tool that may request or order a service. Also, the term "driver," "provider," "service provider," and "supplier" in the present disclosure are used interchangeably to refer to an individual, an entity or a tool that may provide a service or facilitate the providing of the service. The term "user" in the present disclosure may refer to an individual, an entity or a tool that may request a service, order a service, provide a service, or facilitate the providing of the service. For example, the user may be a passenger, a driver, an operator, or the like, or any combination thereof. In the present disclosure, "passenger" and "passenger terminal" may be used interchangeably, "driver" and "driver terminal" may be used interchangeably, and "user" and "user terminal" may be used interchangeably.

The term "service request" and "order" in the present disclosure are used interchangeably to refer to a request that may be initiated by a passenger, a requestor, a service requestor, a customer, a driver, a provider, a service provider, a supplier, or the like, or any combination thereof. The service request may be accepted by any one of a passenger, a requestor, a service requestor, a customer, a driver, a provider, a service provider, or a supplier. The service request may be chargeable or free.

The term "navigation route" in the present disclosure may refer to a travel path that allows a service provider to reach a desired location. For example, in an online car hailing service, a service provider may drive to a departure location to pick up the service requestor by following a travel path recommended by the on-demand service system. The travel path may be designated as the navigation route. The term "candidate navigation route" in the present disclosure may refer to a potential travel path that the service provider will use.

The term "destination" in the present disclosure may refer to a location that a service provider finishes a service order initiated by a service requestor. For example, in an online car hailing service, a service provider may carry a service requestor to a gate of an office building and charge the service requestor. The gate of the office building may be the destination of the service order. The term "modified destination" in the present disclosure may refer to a location that a service provider finishes a service order and differs from the destination.

The position and/or location in the present disclosure may be acquired by positioning technology embedded in a user terminal. The positioning technology used in the present disclosure may include a global positioning system (GPS), a global navigation satellite system (GLONASS), a compass navigation system (COMPASS), a Galileo positioning system, a quasi-zenith satellite system (QZSS), a wireless fidelity (Wi-Fi) positioning technology, or the like, or any combination thereof. One or more of the above positioning technologies may be used interchangeably in the present disclosure.

An aspect of the present disclosure relates to online systems and methods for providing a navigation route. According to the present disclosure, the systems and methods may obtain a location of a service provider designated to receive a service order from a service requestor. The systems and methods may determine one or more candidate navigation routes based on service order and the location of the service provider. The systems and methods may further send the one or more candidate navigation routes to the service requestor. The systems and methods may obtain a candidate navigation route determined by the service requestor and send the determined candidate navigation route to the service provider. The service provider may drive to the departure location of the service and/or the destination of the service order by following the determined navigation route. The present disclosure provides one or more candidate navigation routes to the service requestor to determine the travel route that fits his/her requirement. The present disclosure further enables real-time change of the information related to the service order, and synchronously updates the data stored on the requestor terminal and the provider terminal in response to a real-time change. As such, the present disclosure improves the data consistency between the server, the requestor terminal and the provider terminal. Accordingly, the present disclosure enhances the user experience when the service provider (i.e., the driver) is unfamiliar with the area and/or misled by the navigation information. Furthermore, the present disclosure enhances the user experience by preventing user-provider disputes due to data inconsistency between the requestor terminal and the provider terminal.

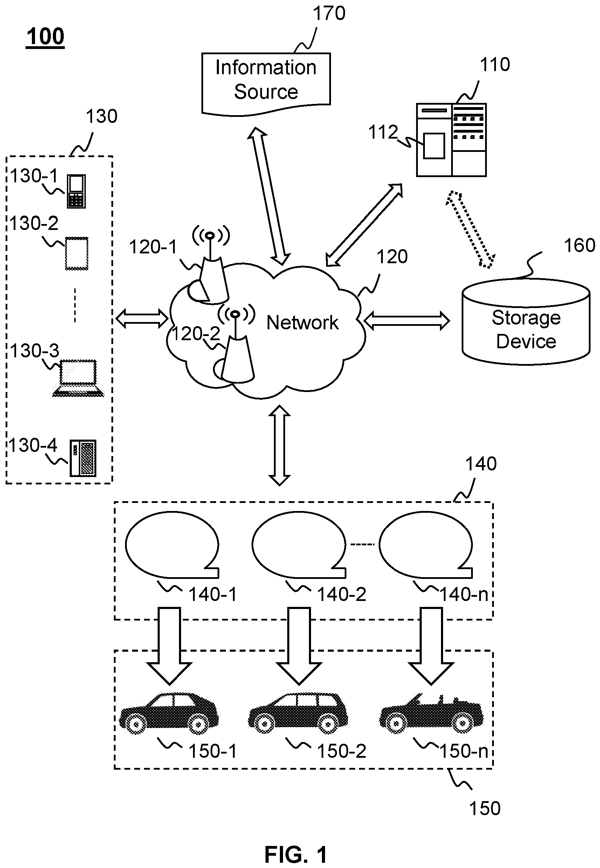

FIG. 1 is a schematic diagram of an exemplary on-demand service system 100 according to some embodiments of the present disclosure. For example, the on-demand service system 100 may be an online transportation service platform for transportation services such as taxi hailing, chauffeur services, delivery vehicles, carpool, bus service, driver hiring and shuttle services. The on-demand service system 100 may include a server 110, a network 120, a requestor terminal 130, a provider terminal 140, a vehicle 150, a storage device 160, and an information source 170. The server 110 may include a processing engine 112.

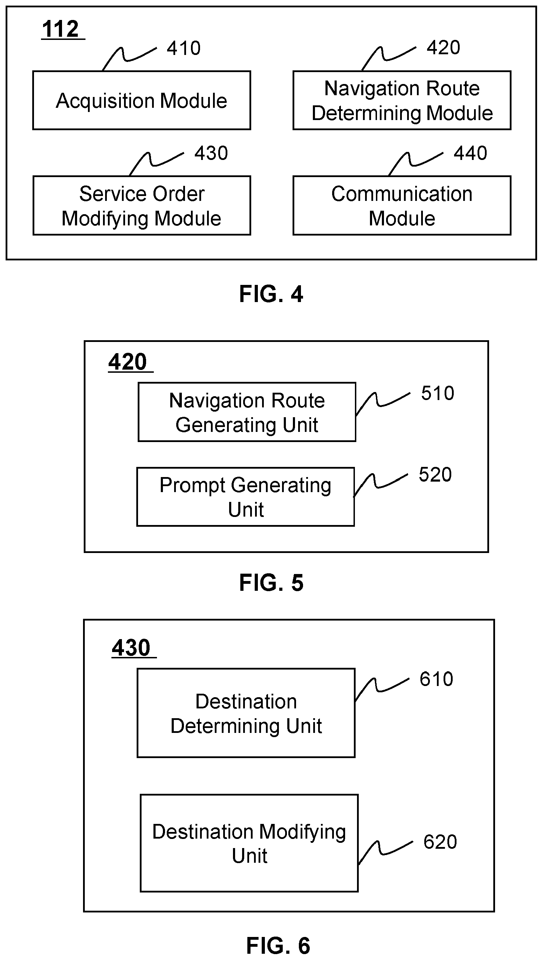

In some embodiments, the server 110 may be a single server or a server group. The server group may be centralized, or distributed (e.g., the server 110 may be a distributed system). In some embodiments, the server 110 may be local or remote. For example, the server 110 may access information and/or data stored in the requestor terminal 130, the provider terminal 140, and/or the storage device 160 via the network 120. As another example, the server 110 may be directly connected to the requestor terminal 130, the provider terminal 140, and/or the storage device 160 to access stored information and/or data. In some embodiments, the server 110 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof. In some embodiments, the server 110 may have one or more components illustrated in FIG. 4 in the present disclosure.

In some embodiments, the server 110 may include a processing engine 112. The processing engine 112 may process information and/or data relating to the service request to perform one or more functions described in the present disclosure. For example, the processing engine 112 may generate determination information based on the service order obtained from the requestor terminal 130. In some embodiments, the processing engine 112 may include one or more processing engines (e.g., single-core processing engine(s) or multi-core processor(s)). Merely by way of example, the processing engine 112 may include one or more hardware processors, such as a central processing unit (CPU), an application-specific integrated circuit (ASIC), an application-specific instruction-set processor (ASIP), a graphics processing unit (GPU), a physics processing unit (PPU), a digital signal processor (DSP), a field-programmable gate array (FPGA), a programmable logic device (PLD), a controller, a microcontroller unit, a reduced instruction-set computer (RISC), a microprocessor, or the like, or any combination thereof.

The network 120 may facilitate the exchange of information and/or data. In some embodiments, one or more components in the on-demand service system 100 (e.g., the server 110, the requestor terminal 130, the provider terminal 140, the vehicle 150, the storage device 160) may send information and/or data to other component(s) in on-demand service system 100 via the network 120. For example, the server 110 may obtain/acquire service request from the requestor terminal 130 via the network 120. In some embodiments, the network 120 may be any type of wired or wireless network, or a combination thereof. Merely by way of example, the network 120 may include a cable network, a wireline network, an optical fiber network, a telecommunications network, an intranet, the Internet, a local area network (LAN), a wide area network (WAN), a wireless local area network (WLAN), a metropolitan area network (MAN), a wide area network (WAN), a public telephone switched network (PSTN), a Bluetooth network, a ZigBee network, a near field communication (NFC) network, or the like, or any combination thereof. In some embodiments, the network 120 may include one or more network access points. For example, the network 120 may include wired or wireless network access points such as base stations and/or internet exchange points 120-1, 120-2, ..., through which one or more components of the on-demand service system 100 may be connected to the network 120 to exchange data and/or information.

In some embodiments, a requestor may be a user of the requestor terminal 130. In some embodiments, the user of the requestor terminal 130 may be someone other than the requestor. For example, a user A of the requestor terminal 130 may use the requestor terminal 130 to send a service request for a user B, or receive service and/or information or instructions from the server 110. In some embodiments, a provider may be a user of the provider terminal 140. In some embodiments, the user of the provider terminal 140 may be someone other than the provider. For example, a user C of the provider terminal 140 may user the provider terminal 140 to receive a service request for a user D, and/or information or instructions from the server 110. In some embodiments, "requestor" and "requestor terminal" may be used interchangeably, and "provider" and "provider terminal" may be used interchangeably.

In some embodiments, the requestor terminal 130 may include a mobile device 130-1, a tablet computer 130-2, a laptop computer 130-3, a built-in device in a motor vehicle 130-4, or the like, or any combination thereof. In some embodiments, the mobile device 130-1 may include a smart home device, a wearable device, a mobile device, a virtual reality device, an augmented reality device, or the like, or any combination thereof. In some embodiments, the smart home device may include a smart lighting device, a control device of an intelligent electronic apparatus, a smart monitoring device, a smart television, a smart video camera, an interphone, or the like, or any combination thereof. In some embodiments, the wearable device may include a bracelet, footgear, glasses, a helmet, a watch, clothing, a backpack, a smart accessory, or the like, or any combination thereof. In some embodiments, the mobile device may include a mobile phone, a personal digital assistance (PDA), a gaming device, a navigation device, a point of sale (POS) device, a laptop, a desktop, or the like, or any combination thereof. In some embodiments, the virtual reality device and/or the augmented reality device may include a virtual reality helmet, a virtual reality glass, a virtual reality patch, an augmented reality helmet, augmented reality glasses, an augmented reality patch, or the like, or any combination thereof. For example, the virtual reality device and/or the augmented reality device may include a Google Glass™, an Oculus Rift™, a Hololens™, a Gear VRTM, etc. In some embodiments, a built-in device in the motor vehicle 130-4 may include an onboard computer, an onboard television, etc. In some embodiments, the requestor terminal 130 may be a device with positioning technology for locating the position of the requestor and/or the requestor terminal 130.

The provider terminal 140 may include a plurality of driver equipments 140-1, 140-2, ..., 140-3, 140-4. In some embodiments, the provider terminal 140 may be a device that is similar to, or the same as the requestor terminal 130. In some embodiments, the provider terminal 140 may be a device utilizing positioning technology for locating the position of a user of the provider terminal 140 (e.g., a service provider) and/or the provider terminal 140. In some embodiments, the requestor terminal 130 and/or the provider terminal 140 may communicate with one or more other positioning devices to determine the position of the requestor, the requestor terminal 130, the provider, and/or the provider terminal 140. In some embodiments, the requestor terminal 130 and/or the provider terminal 140 may send positioning information to the server 110.

In some embodiments, the provider terminal 140 may correspond to one or more vehicles 150. The vehicles 150 may carry the passenger and travel to the destination. The vehicles 150 may include a plurality of vehicles 150-1, 150-2, ..., 150-n. One vehicle may correspond to one vehicle type. The vehicle types may include a taxi, a luxury car, an express car, a bus, a shuttle, etc.

The storage device 160 may store data and/or instructions. In some embodiments, the storage device 160 may store data obtained from the requestor terminal 130 and/or the provider terminal 140. In some embodiments, the storage device 160 may store data and/or instructions that the server 110 may execute or use to perform exemplary methods described in the present disclosure. In some embodiments, storage device 160 may include a mass storage, a removable storage, a volatile read-and-write memory, a read-only memory (ROM), or the like, or any combination thereof. Exemplary mass storage may include a magnetic disk, an optical disk, a solid-state drive, etc. Exemplary removable storage may include a flash drive, a floppy disk, an optical disk, a memory card, a zip disk, a magnetic tape, etc. Exemplary volatile read-and-write memory may include a random access memory (RAM). Exemplary RAM may include a dynamic RAM (DRAM), a double date rate synchronous dynamic RAM (DDR SDRAM), a static RAM (SRAM), a thyrisor RAM (T-RAM), and a zero-capacitor RAM (Z-RAM), etc. Exemplary ROM may include a mask ROM (MROM), a programmable ROM (PROM), an erasable programmable ROM (EPROM), an electrically-erasable programmable ROM (EEPROM), a compact disk ROM (CD-ROM), and a digital versatile disk ROM, etc. In some embodiments, the storage device 160 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof.

In some embodiments, the storage device 160 may be connected to the network 120 to communicate with one or more components in the on-demand service system 100 (e.g., the server 110, the requestor terminal 130, or the provider terminal 140). One or more components in the on-demand service system 100 may access the data or instructions stored in the storage device 160 via the network 120. In some embodiments, the storage device 160 may be directly connected to or communicate with one or more components in the on-demand service system 100 (e.g., the server 110, the requestor terminal 130, the provider terminal 140). In some embodiments, the storage device 160 may be part of the server 110.

In some embodiments, one or more components in the on-demand service system 100 (e.g., the server 110, the requestor terminal 130, the provider terminal 140) may have permission to access the storage device 160. In some embodiments, one or more components in the on-demand service system 100 may read and/or modify information relating to the requestor, provider, and/or the public when one or more conditions are met. For example, the server 110 may read and/or modify one or more users' information after a service order is completed. As another example, the provider terminal 140 may access information relating to the requestor when receiving a service request from the requestor terminal 130, but the provider terminal 140 may not modify the relevant information of the requestor.

The information source 170 may be a source configured to provide other information for the on-demand service system 100. The information source 170 may provide the on-demand service system 100 with service information, such as weather conditions, traffic information, information of laws and regulations, news events, life information, life guide information, or the like, or any combination thereof. The information source 170 may be implemented in a single central server, multiple servers connected via a communication link, or multiple personal devices. When the information source 170 is implemented in multiple personal devices, the personal devices may generate content (e.g., as referred to as the "user-generated content"), for example, by uploading text, voice, image and video to a cloud server. An information source 170 may be generated by the multiple personal devices and the cloud server.

In some embodiments, information exchanging of one or more components in the on-demand service system 100 may be achieved by way of requesting a service. The object of the service request may be any product. In some embodiments, the product may be a tangible product or an immaterial product. The tangible product may include food, medicine, commodity, chemical product, electronic appliance, clothing, car, housing, luxury, or the like, or any combination thereof. The immaterial product may include a servicing product, a financial product, a knowledge product, an internet product, or the like, or any combination thereof. The internet product may include an individual host product, a web product, a mobile internet product, a commercial host product, an embedded product, or the like, or any combination thereof. The mobile internet product may be used in a software of a mobile terminal, a program, a system, or the like, or any combination thereof. The mobile terminal may include a tablet computer, a laptop computer, a mobile phone, a personal digital assistance (PDA), a smart watch, a point of sale (POS) device, an onboard computer, an onboard television, a wearable device, or the like, or any combination thereof. For example, the product may be any software and/or application used in the computer or mobile phone. The software and/or application may relate to socializing, shopping, transporting, entertainment, learning, investment, or the like, or any combination thereof. In some embodiments, the software and/or application relating to transporting may include a traveling software and/or application, a vehicle scheduling software and/or application, a mapping software and/or application, etc. In the vehicle scheduling software and/or application, the vehicle 150 may include a horse, a carriage, a rickshaw (e.g., a wheelbarrow, a bike, a tricycle), a car (e.g., a taxi, a bus, a private car), a train, a subway, a vessel, an aircraft (e.g., an airplane, a helicopter, a space shuttle, a rocket, a hot-air balloon), or the like, or any combination thereof.

One of ordinary skill in the art would understand that when an element of the on-demand service system 100 performs, the element may perform through electrical signals and/or electromagnetic signals. For example, when a requestor terminal 130 processes a task, such as making a determination, identifying or selecting an object, the requestor terminal 130 may operate logic circuits in its processor to process such task. When the requestor terminal 130 sends out a service request to the server 110, a processor of the requestor terminal 130 may generate electrical signals encoding the request. The processor of the requestor terminal 130 may then send the electrical signals to an output port. If the requestor terminal 130 communicates with the server 110 via a wired network, the output port may be physically connected to a cable, which further transmit the electrical signal to an input port of the server 110. If the requestor terminal 130 communicates with the server 110 via a wireless network, the output port of the requestor terminal 130 may be one or more antennas, which convert the electrical signal to electromagnetic signal. Similarly, a provider terminal 140 may process a task through operation of logic circuits in its processor, and receive an instruction and/or service request from the server 110 via electrical signal or electromagnet signals. Within an electronic device, such as the requestor terminal 130, the provider terminal 140, and/or the server 110, when a processor thereof processes an instruction, sends out an instruction, and/or performs an action, the instruction and/or action is conducted via electrical signals. For example, when the processor retrieves or saves data from a storage medium, it may send out electrical signals to a read/write device of the storage medium, which may read or write structured data in the storage medium. The structured data may be transmitted to the processor in the form of electrical signals via a bus of the electronic device. Here, an electrical signal may refer to one electrical signal, a series of electrical signals, and/or a plurality of discrete electrical signals.

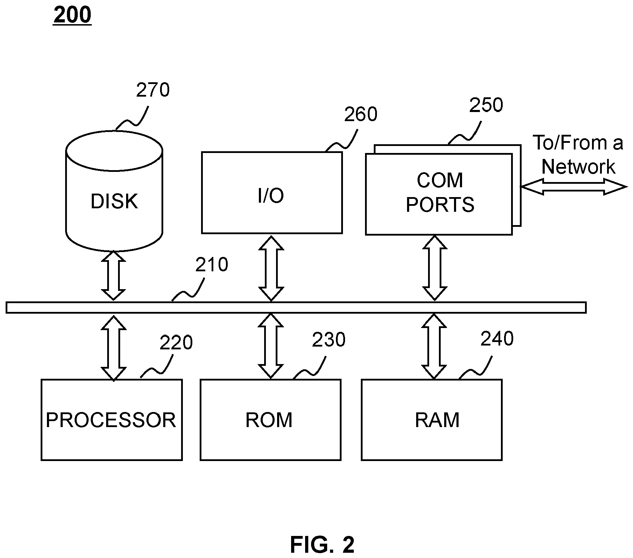

FIG. 2 is a schematic diagram illustrating an exemplary hardware and software components of a computing device 200 on which the server 110, the requestor terminal 130, the provider terminal 140, the storage device 160, and/or the information source 170 may be implemented according to some embodiments of the present disclosure. The particular system may use a functional block diagram to explain the hardware platform containing one or more user interfaces. The computer may be a computer with general or specific functions. Both types of the computers may be configured to implement any particular system according to some embodiments of the present disclosure. The computing device 200 may be configured to implement any components that perform one or more functions disclosed in the present disclosure. For example, the computing device 200 may implement any component of the on-demand service system 100 as described herein. In FIGs. 1 and 2, only one such computer device is shown purely for convenience purposes. One of ordinary skill in the art would understood at the time of filing of this application that the computer functions relating to the on-demand service as described herein may be implemented in a distributed fashion on a number of similar platforms, to distribute the processing load.

The computing device 200, for example, may include COM ports 250 connected to and from a network connected thereto to facilitate data communications. The computing device 200 may also include a processor (e.g., the processor 220), in the form of one or more processors (e.g., logic circuits), for executing program instructions. For example, the processor 220 may include interface circuits and processing circuits therein. The interface circuits may be configured to receive electronic signals from a bus 210, wherein the electronic signals encode structured data and/or instructions for the processing circuits to process. The processing circuits may conduct logic calculations, and then determine a conclusion, a result, and/or an instruction encoded as electronic signals. Then the interface circuits may send out the electronic signals from the processing circuits via the bus 210.

The computing device 200 may include a program storage and data storage of different forms including, for example, a disk 270, and a read only memory (ROM) 230, or a random access memory (RAM) 240, for various data files to be processed and/or transmitted by the computing device. The computing device 200 may also include program instructions stored in the ROM 230, the RAM 240, and/or other type of non-transitory storage medium to be executed by the processor 220. The methods and/or processes of the present disclosure may be implemented as the program instructions. The computing device 200 also includes an I/O component 260, supporting input/output between the computer and other components. The computing device 200 may also receive programming and data via network communications.

Merely for illustration, only one CPU and/or processor is illustrated in FIG. 2. Multiple CPUs and/or processors are also contemplated; thus, operations and/or method steps performed by one CPU and/or processor as described in the present disclosure may also be jointly or separately performed by the multiple CPUs and/or processors. For example, if in the present disclosure the CPU and/or processor of the computing device 200 executes both step A and step B, it should be understood that step A and step B may also be performed by two different CPUs and/or processors jointly or separately in the computing device 200 (e.g., the first processor executes step A and the second processor executes step B, or the first and second processors jointly execute steps A and B).

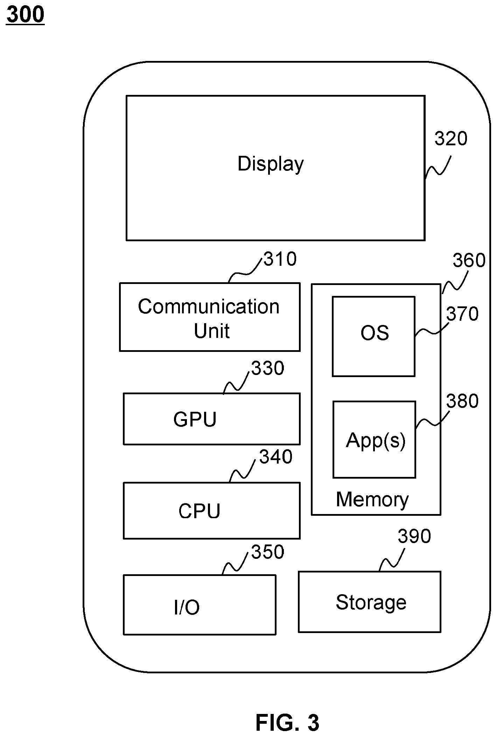

FIG. 3 is a schematic diagram illustrating exemplary hardware and/or software components of an exemplary mobile device 300 on which the requester terminal 130 or the provider terminal 140 may be implemented according to some embodiments of the present disclosure. As illustrated in FIG. 3, the mobile device 300 may include a communication platform 310, a display 320, a graphic processing unit (GPU) 330, a central processing unit (CPU) 340, an I/O 350, a memory 360, and a storage 390. The CPU 340 may include interface circuits and processing circuits similar to the processor 220. In some embodiments, any other suitable component, including but not limited to a system bus or a controller (not shown), may also be included in the mobile device 300. In some embodiments, a mobile operating system 370 (e.g., iOS™, Android™, Windows Phone™) and one or more applications 380 may be loaded into the memory 360 from the storage 390 in order to be executed by the CPU 340. The applications 380 may include a browser or any other suitable mobile apps for receiving and rendering information relating to a service request or other information from the on-demand service system 100. User interactions with the information stream may be achieved via the I/O devices 350 and provided to the processing engine 112 and/or other components of the on-demand service system 100 via the network 120.

In order to implement various modules, units and their functions described above, a computer hardware platform may be used as hardware platforms of one or more elements (e.g., a module of the sever 110 described in FIG. 2). Since these hardware elements, operating systems, and program languages are common, it may be assumed that persons skilled in the art may be familiar with these techniques and they may be able to provide information required in the route planning according to the techniques described in the present disclosure. A computer with user interface may be used as a personal computer (PC), or other types of workstations or terminal devices. After being properly programmed, a computer with user interface may be used as a server. It may be considered that those skilled in the art may also be familiar with such structures, programs, or general operations of this type of computer device. Thus, extra explanations are not described for the figures.

FIG. 4 is a block diagram illustrating an exemplary processing engine 112 according to some embodiments. The processing engine 112 may include an acquisition module 410, a navigation route determining module 420, a service order modifying module 430, and a communication module 440. The modules may be hardware circuits of all or part of the processing engine 112. The modules may also be implemented as an application or set of instructions read and executed by the processing engine 112. Further, the modules may be any combination of the hardware circuits and the application/instructions. For example, the modules may be the part of the processing engine 112 when the processing engine 112 is executing the application/set of instructions.

The acquisition module 410 may be configured to obtain information related to the service order from one or more components in the on-demand service system 100 (e.g., the requestor terminal 130, the provider terminal 140). For example, the acquisition module 410 may obtain a location of a service provider designated to a service order associated with a service requestor, determination information related to the determined navigation route selected by the service requestor, a present location of the service requestor, or the like, or any combination thereof.

The navigation route determining module 420 may be configured to determine navigation routes associated with the service order. For example, the navigation route determining module 420 may generate one or more candidate navigation routes based on the service order and the location of the service provider, obtain a navigation route determined by the service requestor, analyze the navigation route determined by the service requestor, generate the information associated with the service order based on the modified destination and the present location of the service requestor, or the like, or any combination thereof.

The service order modifying module 430 may be configured to modify information associated with the service order. For example, the service order modifying module 430 may determine a modified destination based on the modification request. As another example, the service order modifying module 430 may change the destination of the service order to the modified destination.

The communication module 440 may configured to receive and/or send information related to the service order from and/or to one or more components in the on-demand service system 100 (e.g., the requestor terminal 130, the provider terminal 140, the storage device 160). For example, the communication module 440 may send the one or more candidate navigation routes to the service requestor, obtain the determination information, send the determined candidate navigation route to the service provider, obtain a modification request relating to the destination from the service requestor, or the like, or any combination thereof.

The modules in the processing engine 112 may be connected to or communicate with each other via a wired connection or a wireless connection. The wired connection may include a metal cable, an optical cable, a hybrid cable, or the like, or any combination thereof. The wireless connection may include a Local Area Network (LAN), a Wide Area Network (WAN), a Bluetooth™, a ZigBee™, a Near Field Communication (NFC), or the like, or any combination thereof. Two or more of the modules may be combined as a single module, and any one of the modules may be divided into two or more units. For example, the service order modifying module 430 may be integrated in the navigation route determining module 420 as a single module that may both determine navigation route and modify the destination based on the service order. As another example, the service order modifying module 430 may be divided into two units of a destination determination unit and a destination modification unit to implement the functions of the service order modifying module 430, respectively.

FIG. 5 is a block diagram illustrating an exemplary navigation route determining module 420 according to some embodiments. The navigation route determining module 420 may include a navigation route generating unit 510 and a prompt generating unit 520. The navigation route generating unit 510 and the prompt generating unit 520 may be hardware circuits of all or part of the navigation route determining module 420. The navigation route generating unit 510 and the prompt generating unit 520 may also be implemented as an application or set of instructions read and executed by the navigation route determining module 420. Further, the navigation route generating unit 510 and the prompt generating unit 520 may be any combination of the hardware circuits and the application/instructions. For example, the navigation route generating unit 510 and the prompt generating unit 520 may be the part of the navigation route determining module 420 when the navigation route determining module 420 is executing the application/set of instructions.

The navigation route generating unit 510 may be configured to generate one or more navigation routes based on the service order and generate information associated with the service order. For example, the navigation route generating unit 510 may generate one or more candidate navigation routes based on the service order and the location of the service provider. As another example, the navigation route generating unit 510 may generate information associated with the service order based on the modified destination and the present location of the service requestor.

The prompt generating unit 520 may be configured to generate instructions and send the instructions to one or more components in the on-demand service system 100 (e.g., the requestor terminal 130, the provider terminal 140). For example, the prompt generating unit 520 may generate a first prompt of selection instruction and send the first prompt to the service requestor. As another example, the prompt generating unit 520 may send a second prompt of wait instruction to the service provider or send a third prompt of modification instruction to the service requestor and/or the service provider.

FIG. 6 is a block diagram illustrating an exemplary service order modifying module 430 according to some embodiments. The service order modifying module 430 may include a destination determining unit 610 and a destination modifying unit 620. The destination determining unit 610 and the destination modifying unit 620 may be hardware circuits of all or part of the service order modifying module 430. The destination determining unit 610 and the destination modifying unit 620 may also be implemented as an application or set of instructions read and executed by the service order modifying module 430. Further, the destination determining unit 610 and the destination modifying unit 620 may be any combination of the hardware circuits and the application/instructions. For example, the destination determining unit 610 and the destination modifying unit 620 may be the part of the service order modifying module 430 when the service order modification module is executing the application/set of instructions.

The destination determining unit 610 may be configured to determine the destination associated with the service order. For example, the destination determining unit 610 may determine a modified destination based on the modification request from a service requestor. In some embodiments, the modification request may include destination change information of the service order. The destination change information of the service order may include the request time of the modification request, the original destination of the service order, the modified destination of the service order, or the like, or any combination thereof.

The destination modifying unit 620 may be configured to modify the destination associated with service order. For example, the destination modifying unit 620 may change the destination of the service order to the modified destination.

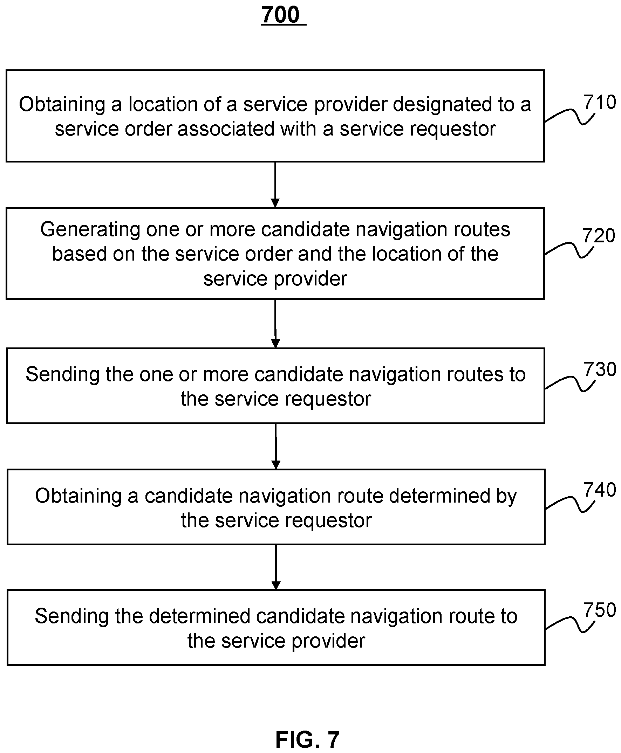

FIG. 7 is a flowchart of an exemplary process 700 for providing a navigation route according to some embodiments of the present disclosure. In some embodiments, one or more operations in the process 700 may be implemented in the on-demand service system 100 illustrated in FIG. 1. For example, one or more operations in the process 700 may be stored in the storage device 160 and/or the storage (e.g., the ROM 230, the RAM 240) as a form of instructions, and invoked and/or executed by the server 110 (e.g., the processing engine 112 in the server 110, or the processor 220 of the processing engine 112 in the server 110).

In 710, the processor 220 (or the acquisition module 410) may obtain a location of a service provider designated to a service order associated with a service requestor.

In some embodiments, the processor 220 may be included in an online on-demand service platform (e.g., a transportation service platform), such as the on-demand service system 100. According to the invention, the service order is a transportation service request order, for example, an online car hailing service request order, a taxi service request order, a tailored car service request order, or the like, or any combination thereof. The service provider may be a user of the provider terminal 140, and the service requestor may be a user of the requestor terminal 130. For example, in an online car hailing service, the service requestor may be a passenger initiating the service request, and the service provider may be a driver accepting the service request.

In some embodiments, the service order may include original data associated with the service order and/or the service requestor. For example, the original data may include a request time of the service order, a departure location of the service order, a destination of the service order, an expected pickup time, an expected arriving time, a position where the service requestor initiates the service order, whether the service requestor accepts dynamic price adjustment (e.g., raising the service price), whether the service requestor accepts to change a service mode (e.g., from taxi service to carpooling service), a number of total passengers, a number of total luggage, special accessories requested (e.g., infant car seat), identity information of the service requestor and/or the service provider, or the like, or any combination thereof.

In some embodiments, the location of the service provider may include position information of the service provider. The provider terminal 140 of the service provider may be implemented with an application that can obtain the location of the service provider by using a positioning technology. The positioning technology may be a Global Positioning System (GPS) technology, a Beidou navigation system technology, a Global Navigation Satellite System (GLONASS) technology, a Galileo positioning system (Galileo) technology, a Quasi-Zenith Satellite System (QAZZ) technology, a base station positioning technology, a Wi-Fi positioning technology, or the like, or any combination thereof. The processor 220 (or the acquisition module 410) may obtain the location from the provider terminal 140 of the service provider via the network 120.

In 720, the processor 220 (or the navigation route generating unit 510 of the navigation route determining module 420) may generate one or more candidate navigation routes based on the service order and the location of the service provider.

In some embodiments, the one or more candidate navigation routes may include one or more navigating options via which the service provider can reach a desired location (e.g., a pick-up location, a destination of the service requestor). The one or more navigating options may be determined based on a plurality of factors, for example, a fastest route, a shortest route, a route with toll fee, a route that does not require toll fee, a route with less traffic accident reports based on current traffic information, a route with traffic jams, a route without traffic jams, or the like, or any combination thereof. When the service provider is unfamiliar with the area or the traffic conditions, the one or more candidate navigation routes may assist the service provider to prepare for picking up the service requestor once the service requestor confirms at least one candidate navigation route. According to the invention, the one or more candidate navigation routes include a passenger pick-up navigation route between the departure location of the service order and the location of the service provider. The one or more candidate navigation routes may moreover include a service order navigation route between the destination of the service order and the location of the service provider, or the like, or any combination thereof. In some embodiments, the processor 220 may determine the one or more candidate navigation routes based on modeling languages. For example, the modeling languages may include a Stanford Research Institute Problem Solver (STRIPS) language, an Action Description Language (ADL), a Planning Domain Definition Language (PDDL), or the like, or any combination thereof. In some embodiments, the processor 220 may determine the one or more candidate navigation routes based on route planning techniques and/or algorithms. For example, the route planning techniques may include a machine learning technique, an artificial intelligence technique, a template approach technique, an artificial potential field technique, or the like, or any combination thereof. The route planning algorithms may include a double direction A-star algorithm, an A-star algorithm, a sample algorithm, or the like, or any combination thereof. It should be noted that the persons having ordinary skills in the art may obtain the one or more candidate navigation routes by using any other technologies, and not affect the actual result of the determination of the one or more candidate navigation routes in the present disclosure.

In 730, the processor 220 (or the communication module 440) may send the one or more candidate navigation routes to the service requestor. In some embodiments, the processor 220 (or the communication module 408) may send the one or more candidate navigation routes to the service requestor via the network 120.

In 740, the processor 220 (or the navigation route determining module 420) may obtain a candidate navigation route determined by the service requestor. For the purpose of illustration, the candidate navigation route chosen by the service requestor may be hereinafter referred to as a "determined candidate navigation route."

In some embodiments, the determined candidate navigation route may be a route determined by the service requestor from the one or more candidate navigation routes. In some embodiments, the processor 220 (or the prompt generating unit 520 of the navigation route determining module 420) may generate a first prompt of selection instruction and send the first prompt to the service requestor via the network 120. The first prompt of selection instruction may be used to generate a navigation route selection window on an electronic device (e.g., a requestor terminal 130) to display the one or more candidate navigation routes on the navigation route selection window. As another example, the first prompt of selection instruction may be used to generate a reminder to remind the service requestor to choose a navigation route from the one or more candidate navigation routes. In some embodiments, the reminder may be a ringtone reminder, a vibration reminder, a voice reminder, a music reminder, a color changing reminder, or the like, or any combination thereof. For example, when the navigation route selection window is generated on the requestor terminal 130, the requestor terminal 130 may remind the passenger to choose a candidate navigation route by vibrating.

In some embodiments, after the service requestor determines the candidate navigation route, the processor 220 (or the acquisition module 410) may obtain determination information related to the determined navigation route selected by the service requestor. The determination information may include the number of the determined candidate navigation route determined by the service requestor, the use of the determined candidate navigation route(s) (e.g., for passenger pick-up or for service order), the departure location(s) of the determined candidate navigation route(s), the destination(s) of the determined candidate navigation route(s), the travel path(s) of the determined candidate navigation route(s), or the like, or any combination thereof. In some embodiments, the determination information may be generated by the electronic device after the service requestor makes a selection from the one or more candidate navigation routes. For example, if the service requestor chooses a passenger pick-up navigation route from the one or more candidate navigation routes, the requestor terminal 130 may generate determination information associated with the passenger pick-up navigation route. If the service requestor does not choose any one of the one or more candidate navigation routes, the requestor terminal may also generate the determination information. The determination information may be independent of any of the one or more candidate navigation routes. Meanwhile, the determination information may include a notice that the service requestor does not determine a navigation route. In some embodiments, the processor 220 (or the communication module 440) may obtain the determination information from the requestor terminal 130 via the network 120.

In some embodiments, the processor 220 (or the prompt generating unit 520 of the navigation route determining module 420) may send a second prompt of wait instruction to the service provider before obtaining the determination information of the service requestor. The second prompt wait instruction may be used to generate a waiting window on an electronic device (e.g., a provider terminal 140) and remind the service provider to wait for the determined candidate navigation route chosen by the service requestor and forwarded by the server 110. For example, after receiving the second prompt, the provider terminal 140 may display the waiting window to the service provider and remind the service provider to wait. In some embodiments, the reminder may include a ringtone reminder, a vibration reminder, a voice reminder, a music reminder, a color changing reminder, or the like, or any combination thereof.

In some embodiments, the processor 220 (or the navigation route determining module 420) may analyze the determined candidate navigation route and retrieve the determination information based on the analysis

In some embodiments, the processor 220 (or the navigation route determining module 420) may determine whether the determined candidate navigation route matches one of the one or more candidate navigation routes. The processor 220 may compare the departure location, the destination and the travel path of the determined candidate navigation route with each of the one or more candidate navigation routes. For example, if the departure location, the destination and the travel path of the determined candidate navigation route are the same as one of the one or more candidate navigation routes, the processor 220 may determine that the determined candidate navigation route matches one of the one or more candidate navigation routes. If no selection of the one or more candidate navigation routes is made by the service requestor, the processor 220 may determine that the navigation route matches none of the one or more candidate navigation routes.

In some embodiments, the processor 220 (or the communication module 408) may transmit the one or more candidate navigation routes to the service provider in response to the determination that the navigation route matches none of the one or more candidate navigation routes. The service provider may choose one candidate navigation route from the one or more candidate navigation routes. For example, the service provider may get to the departure location of the service order to pick up the service requestor by following the passenger pick-up navigation route in the one or more candidate navigation routes and carry the service requestor to the destination by following the service order navigation route in the one or more candidate navigation routes.

In 750, the processor 220 (or the communication module 408) may send the determined candidate navigation route to the service provider. In some embodiments, the processor 220 (or the communication module 408) may send the determined candidate navigation route to the service provider via the network 120. The service provider may server the service requestor in accordance with the determined candidate navigation route.

For example, one or more other optional operations (e.g., a storing operation, a preprocessing operation) may be added elsewhere in the process 700. As another example, all the operations in the process 700 may be implemented in a computer-readable medium including a set of instructions. The instructions may be transmitted in a form of electronic current or electrical signals.

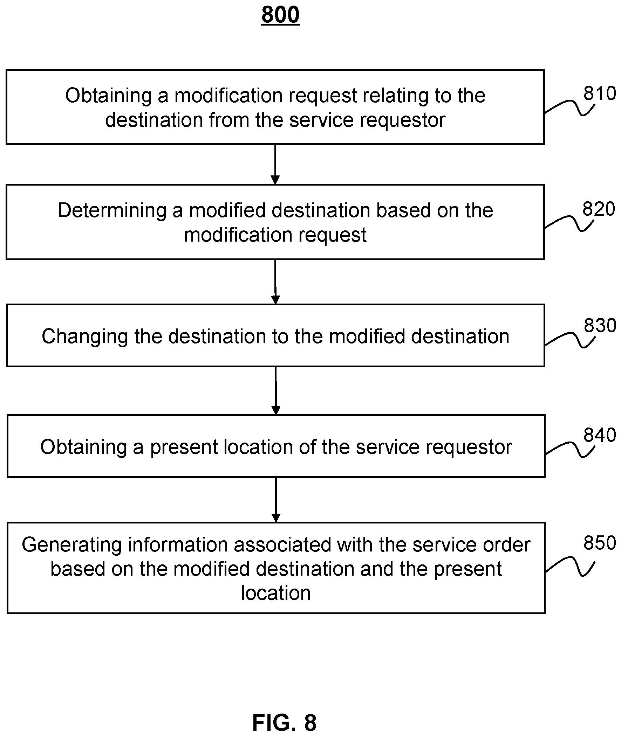

FIG. 8 is a flowchart of an exemplary process 800 for modifying the destination of a service order according to some embodiments of the present disclosure. In some embodiments, one or more operations in the process 800 may be implemented in the on-demand service system 100 illustrated in FIG. 1. For example, one or more operations in the process 800 may be stored in the storage device 160 and/or the storage (e.g., the ROM 230, the RAM 240) as a form of instructions, and invoked and/or executed by the server 110 (e.g., the processing engine 112 in the server 110, or the processor 220 of the processing engine 112 in the server 110).

In 810, the processor 220 (or the communication module 440) may obtain a modification request relating to the destination of the service order from the service requestor.

In some embodiments, the modification request relating to the destination may be a request initiated by the service requestor before the service is provided and/or during the service in order to modify the destination of the service order. For example, in an online car hailing service, if the passenger wants to change the destination from an office building to a gym before the service is provided or the passenger wants to change the destination temporarily during the service, the passenger may send the modification request via an electronic device (i.e., the requestor terminal 130) to the server 110 to change the destination of the service order.

In 820, the processor 220 (or the destination determining unit 610 of the service order modifying module 430) may determine a modified destination of the service order based on the modification request.

In some embodiments, the modified destination may refer to a new destination that used to replace the original destination of the service order. For example, if the service requestor sends a modification request to change the destination from an office building to a gym, the new destination of gym may be designated as the modified destination. In some embodiments, the modification request may include destination change information of the service order. The destination change information of the service order may include the request time of the modification request, the original destination of the service order, the modified destination of the service order, or the like, or any combination thereof. In some embodiments, the processor 220 (or the destination determining unit 610 of the service order modifying module 430) may extract the destination change information of the modification request to obtain the modified destination of the service order.

In 830, the processor 220 (or the destination modifying unit 620 of the service order modifying module 430) may change the destination of the service order to the modified destination. The destination of the service order may be replaced by the modified destination as the final destination of the service order.

In 840, the processor 220 (or the acquisition module 410) may obtain a present location of the service requestor.

In some embodiments, the present location may refer to a location of the service requestor when the processor 220 receives the modification request from the service requestor. In some embodiments, similar to the provider terminal 140, the requestor terminal 130 of the service requestor may also be implemented with an application that can obtain the location of the service requestor by using a positioning technology including, e.g., a Global Positioning System (GPS) technology, a Beidou navigation system technology, a Global Navigation Satellite System (GLONASS) technology, a Galileo positioning system (Galileo) technology, a Quasi-Zenith Satellite System (QAZZ) technology, a base station positioning technology, a Wi-Fi positioning technology, or the like, or any combination thereof. The requestor terminal 130 may obtain the present location of the service requestor and transmit it along with the modification request to the processor 220 via the network 120.

In 850, the processor 220 (or the navigation route generating unit 510 of the navigation route determining module 420) may generate information associated with the service order based on the modified destination and the present location of the service requestor.

In some embodiments, the information associated with the service order may be generated based on the modified destination and the present location of the service requestor. In some embodiments, the information associated with the service order may include a remaining route from the present location of the service requestor to the modified destination associated with the service order, an estimated distance from the present location of the service requestor to the modified destination, an estimated time from the present location of the service requestor to the modified destination, an estimated price of the remaining route, at least one suggested navigation route between the present location of the service requestor and the modified destination, a destination associated with the service order, information of successive order allocation for the service order, information of abnormal expenses interception for the service order, or the like, or any combination thereof. For example, the processor 220 (or the navigation route determining module 420) may conduct a new route planning based on the present location of the service requestor and the modified destination to obtain the remaining route and determine the estimated distance, the estimated time and the estimated price based on the remaining route. Meanwhile, the processor 220 may change the destination associated with the service order to the modified destination, and modify the information of successive order allocation for the service order and information of abnormal expenses interception for the service order.

In some embodiments, the processor 220 (or the prompt generating unit 520 of the navigation route determining module 420) may send a third prompt of modification instruction to the service requestor and/or the service provider. The third prompt of modification instruction may be used to instruct the requestor terminal 130 of the service requestor and/or the provider terminal 140 of the service provider to update the information associated with the service order. For example, if the service requestor wants to change the destination A to the modified destination B and the present location of the service requestor is C. The processor 220 (or the navigation route determining module 420) may generate updated information associated with the service order based on the modified destination and the present location of the service requestor (e.g., the information generated based on the modified destination B and the present location C) and send the information to the requestor terminal 130 and/or the provider terminal 140. Upon receiving the updated information from the processor 220 via the network 120, the requestor terminal 130 and/or the provider terminal 140 may update the information stored therein and refresh the information displayed on a graphical user interface (GUI) (e.g., the display 320) of the navigation application and/or the on-demand service application implemented thereon. In some embodiments, the third prompt may include the modified destination. After receiving the third prompt of modification instruction, the provider terminal 140 may update the destination with the modified destination.

For example, one or more other optional operations (e.g., a storing operation, a preprocessing operation) may be added elsewhere in the process 800. As another example, all the operations in the process 800 may be implemented in a computer-readable medium including a set of instructions. The instructions may be transmitted in a form of electronic current or electrical signals.

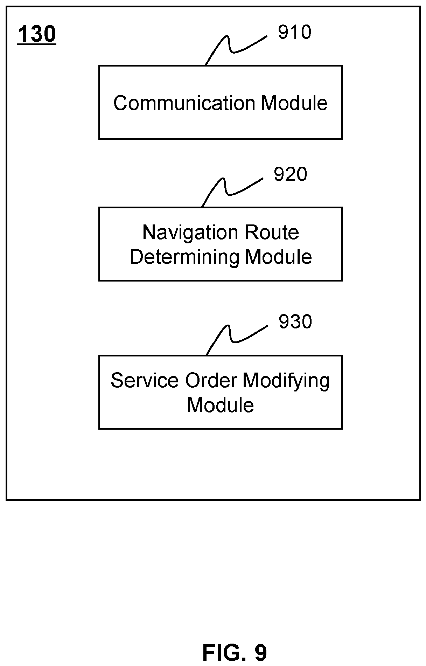

FIG. 9 is a block diagram illustrating an exemplary requestor terminal 130 according to some embodiments of the present disclosure. The requestor terminal 130 may include a communication module 910, a navigation route determining module 920, and a service order modifying module 930. The communication module 910, the navigation route determining module 920, and the service order modifying module 930 may be hardware circuits of all or part of the requestor terminal 130. The communication module 910, the navigation route determining module 920, and the service order modifying module 930 may also be implemented as an application or a set of instructions read and executed by the requestor terminal 130. Further, the communication module 910, the navigation route determining module 920, and the service order modifying module 930 may be any combination of the hardware circuits and the application/instructions. For example, they may be the part of the requestor terminal 130 when the requestor terminal 130 is executing the application/set of instructions.

The communication module 910 may be configured to receive and/or send information related to the service order from and/or to one or more components in the on-demand service system 100 (e.g., the server 110, the storage device 160). For example, the communication module 910 may send a service order from a service requestor to the server 110, receive the one or more candidate navigation routes from the server 110, send the determined candidate navigation route to the server 110, receive a first prompt of selection instruction from the server 110, send the determination information to the server 110, receive a modification request relating to the destination, send the modification request to the server 110, receive a request of modifying destination from a service requestor, send the modification request to the server 110, receive information associated with the service order from the server 110, or the like, or any combination thereof.

The navigation route determining module 920 may be configured to determine a navigation route related to the service order. For example, the navigation route determining module 920 may determine a candidate navigation route according to the instruction of a service requestor.

The service order modifying module 930 may be configured to modify information associated with service order. For example, the service order modifying module 930 may output a modification message to the service requestor and change the destination to the modified destination inputted by the service requestor. As another example, the service order modifying module 930 may update the information related to the destination of the service based on the information associated with the service order.

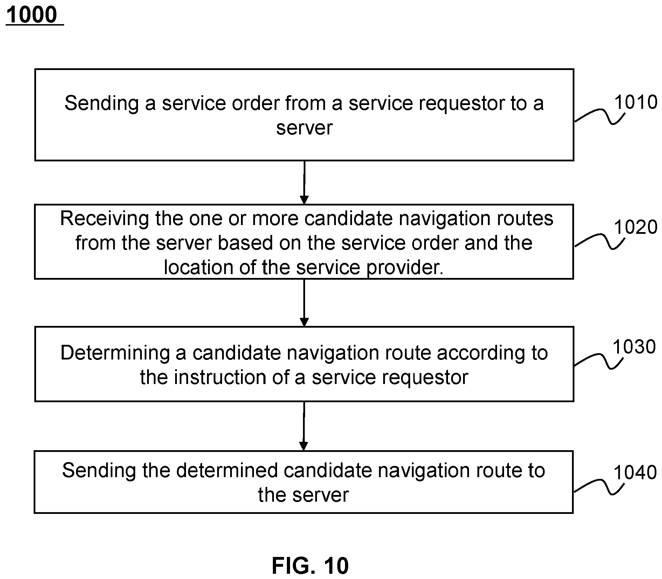

FIG. 10 is a flowchart of an exemplary process 1000 for determining a navigation route according to some embodiments of the present disclosure. In some embodiments, one or more operations in the process 1000 may be implemented in the on-demand service system 100 illustrated in FIG. 1. For example, one or more operations in the process 1000 may be stored in the memory 360 and/or the storage 390 as a form of instructions, and invoked and/or executed by the requestor terminal 130 (e.g., the CPU 340 of the requestor terminal 130).

In 1010, the CPU 340 (or the communication module 910) may send a service order from a service requestor to the server 110.

In some embodiments, the service order may be a transportation service request order, for example, an online car hailing service request order, a taxi service request order, a tailored car service request order, or the like, or any combination thereof. The service requestor may be a user (e.g., a passenger who initiates the service order) of the requestor terminal 130. In some embodiments, the service order may include a departure location of the service order. The departure location may be a location at which a service provider of the service order starts providing the service for the service requestor. For example, in an online car hailing service, the departure location may be a location where the service provider (such as a driver) picks up the service requester (such as a passenger) and starts carry the service requestor to the destination. The server may be the server 110 of the on-demand service system 100. The CPU 340 (or the communication module 910) may send the service order to the server 110 via the network 120.

In 1020, the CPU 340 (or the communication module 910) may receive the one or more candidate navigation routes from the server 110 based on the service order and the location of the service provider.

In some embodiments, the one or more candidate navigation routes may include one or more navigation options via which the service provider can reach a desired location (e.g., a pick-up location, a destination of the service requestor, or the like). The one or more navigating options may be determined based on a plurality of factors, for example, a fastest route, a shortest route, a route with toll fee, a route that does not require toll fee, a route with less traffic accident reports based on current traffic information, etc., or the combination thereof. When the service provider is unfamiliar with the area of the traffic conditions, the one or more candidate navigation routes may assist the service provider to prepare for picking up the service requestor once the service requestor confirms at least one candidate navigation route. In some embodiments, the one or more candidate navigation routes may include a passenger pick-up navigation route between a departure location of the service order and the location of the service provider, a service order navigation route between the destination of the service order and the location of the service provider, or the like, or any combination thereof. In some embodiments, the CPU 340 (or the communication module 910) may obtain the one or more candidate navigation routes from the server 110 via the network 120.

In 1030, the CPU 340 (or the navigation route determining module 920) may determine a candidate navigation route according to the instruction of a service requestor. For the purpose of illustration, the candidate navigation route chosen by the service requestor may be hereinafter referred to as a "determined candidate navigation route."

In some embodiments, the requestor terminal 130 may generate a navigation route selection window on the display 320 of the requestor terminal 130 to show the one or more candidate navigation routes to the service requestor. Each of the one or more candidate navigation routes may correspond to an option displayed on the display 320. In some embodiments, the instruction of the service requestor may include a physical interaction instruction, a voice interaction instruction, or the like, or any combination thereof. The CPU 340 may determine the candidate navigate route from the one or more candidate navigation routes in the navigation route selection window by executing the instruction inputted by the service requestor of the requestor terminal 130. For example, the service requestor may touch one or more options on the display 320. The candidate navigation route corresponding to the options may be determined as the candidate navigation route by the CPU 340. As another example, the service requestor may input a voice (e.g., the voice may be "I choose option 1") into the requestor terminal 130. The CPU 340 may determine the candidate navigation route corresponding to the option 1 based on the voice.

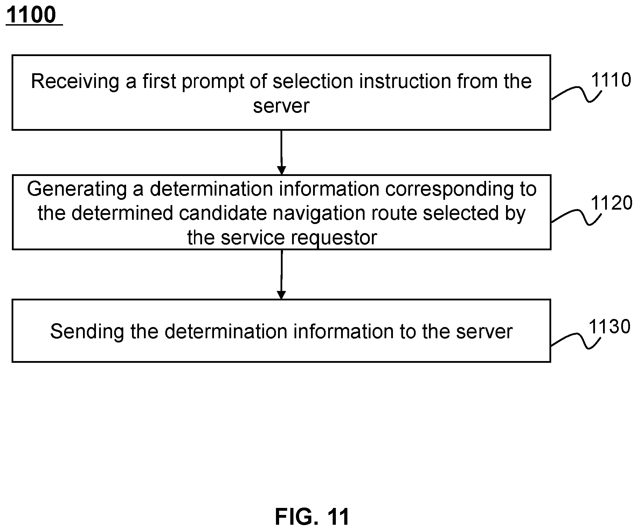

In 1040, the CPU 340 (or the communication module 910) may send the determined candidate navigation route to the server 110. In some embodiments, the CPU 340 (or the communication module 910) may send the determined candidate navigation route to the server 110 via the network 120. More detail of the determination of the navigation route may be found in FIG. 11 and the description thereof in the present disclosure.

For example, one or more other optional operations (e.g., a storing operation, a preprocessing operation) may be added elsewhere in the process 1000. As another example, all the operations in the process 1000 may be implemented in a computer-readable medium including a set of instructions. The instructions may be transmitted in a form of electronic current or electronic signals.

FIG. 11 is a flowchart of an exemplary process 1100 for providing determination information associated with navigation route according to some embodiments of the present disclosure. In some embodiments, one or more operations in the process 1100 may be implemented in the on-demand service system 100 illustrated in FIG. 1. For example, one or more operations in the process 1100 may be stored in the memory 360 and/or the storage 390 as a form of instructions, and invoked and/or executed by the requestor terminal 130 (e.g., the CPU 340 of the requestor terminal 130).

In 1110, the CPU 340 (or the communication module 910) may receive a first prompt of selection instruction from the server 110 via the network 120.

In some embodiments, the first prompt of selection instruction may be used to generate a navigation route selection window on an electronic device (e.g., a requestor terminal 130) to display the one or more candidate navigation routes on the navigation route selection window. The first prompt of selection instruction may be further used to generate a reminder to remind the service requestor to choose one from the one or more candidate navigation routes. In some embodiments, the reminder may be a ringtone reminder, a vibration reminder, a voice reminder, a music reminder, a color changing reminder, or the like, or any combination thereof. For example, when the navigation route selection window is generated on the requestor terminal 130, the requestor terminal 130 may remind the passenger to choose a navigation route by vibrating. In some embodiments, the CPU 340 (or the communication module 910) may receive a first prompt of selection instruction from the server 110 via the network 120.

In 1120, the CPU 340 (or the navigation route determining module 920) may generate determination information related to the determined candidate navigation route selected by the service requestor.

In some embodiments, the determination information related to the determined candidate navigation route may be generated by the requestor terminal 130 after the service requestor makes a selection from the one or more candidate navigation routes in 1030. In some embodiments, the determination information related to the determined candidate navigation route may include the number of the determined candidate navigation route, the use of the determined candidate navigation route(s) (e.g., for passenger pick-up or for service order), the departure location(s) of the determined candidate navigation route(s), the destination(s) of the determined candidate navigation route(s), the driving line(s) of the determined candidate navigation route(s), or the like, or any combination thereof. After determining the determined candidate navigation route in the process 1000, the CPU 340 (or the navigation route determining module 920) may generate the determination information related to the determined candidate navigation route. For example, if the service requestor chooses a passenger pick-up navigation route from the one or more candidate navigation routes, the requestor terminal 130 may generate determination information associated with the passenger pick-up navigation route. If the service requestor does not choose any one of the one or more candidate navigation routes, the requestor terminal 130 may also generate determination information. The determination information may be independent of any of the one or more candidate navigation routes. Meanwhile, the determination information may include a notice that the service requestor does not determine a navigation route. In some embodiments, the processor 220 (or the communication module 440) may obtain the determination information from the requestor terminal 130 via the network 120.

In 1130, the CPU 340 (or the communication module 910) may send the determination information to the server 110 via the network 120.

For example, one or more other optional operations (e.g., a storing operation, a preprocessing operation) may be added elsewhere in the process 1100. As another example, all the operations in the process 1100 may be implemented in a computer-readable medium including a set of instructions. The instructions may be transmitted in a form of electronic current or electronic signals.

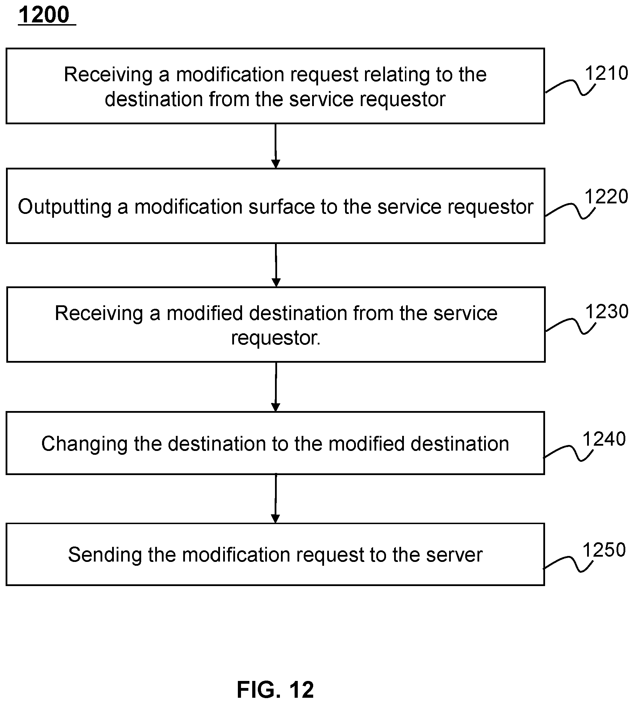

FIG. 12 is a flowchart of an exemplary process 1200 for modifying a destination of a service order according to some embodiments of the present disclosure. In some embodiments, one or more operations in the process 1200 may be implemented in the on-demand service system 100 illustrated in FIG. 1. For example, one or more operations in the process 1200 may be stored in the memory 360 and/or the storage 390 as a form of instructions, and invoked and/or executed by the requestor terminal 130 (e.g., the CPU 340 of the requestor terminal 130).

In 1210, the CPU 340 (or the communication module 910) may receive a modification request relating to the destination of the service order from the service requestor.

In some embodiments, the modification request may be a request initiated by the service requestor before the service is provided and/or during the service in order to modify the destination of the service order. For example, in an online car hailing service, if the passenger wants to change the destination of the service order before the service is provided or the passenger wants to change the destination temporarily during the service, the passenger may initiate the modification request to start the destination modification process on the requestor terminal 130.

In 1220, the CPU 340 (or the service order modifying module 930) may output a modification message to the service requestor on the display 320.

In some embodiments, the modification message may include an interaction interface through which the service requestor can input information into the requestor terminal 130. For example, the service requestor may input a destination that the service requestor wants to change. In some embodiments, the requestor terminal 130 may remind the service requestor that the modification message has been outputted on the display 320 by a reminding method. The reminding method may include voice broadcast, mechanical vibration, display brightness change, or the like, or any combination thereof. For example, the requestor terminal 130 may remind the service requestor to input information via the modification message by broadcasting a reminding voice to the service requestor.

In 1230, the CPU 340 (or the communication module 910) may receive a modified destination of the service order from the service requestor.

In some embodiments, the modified destination may refer to a new destination that used to replace the original destination of the service order. For example, if the service requestor sends a modification request to change the destination from an office building to a gym, the gym may be designated as the modified destination. In some embodiments, the service requestor may input the modified destination via the modification message by using various method including, for example, a text input method, a voice input method, a location probe movement method, or the like, or any combination thereof. For example, the service requestor may send the modified destination to the requestor terminal 130 by inputting the text information of the modified destination. As another example, the service requestor may send the modified destination to the requestor terminal 130 by inputting a voice message associated with the modified destination such as "the modified destination is the central park." As still another example, the service requestor may send the modified destination to the requestor terminal 130 by moving the location probe to the modified destination on an electronic map.

In 1240, the CPU 340 (or the service order modifying module 930) may change the destination of the service order to the modified destination. The destination of the service order may be replaced by the modified destination as the final destination of the service order.

In 1250, the CPU 340 (or the communication module 910) may send the modification request to the server 110. In some embodiments, the modification request may include the modified destination, the original destination, the request time of the modification request, or the like, or any combination thereof. In some embodiments, the CPU 340 (or the communication module 910) may send the modification request to the server 110 via the network 120.

For example, one or more other optional operations (e.g., a storing operation, a preprocessing operation) may be added elsewhere in the process 1200. As another example, all the operations in the process 1200 may be implemented in a computer-readable medium including a set of instructions. The instructions may be transmitted in a form of electronic current or electrical signals.

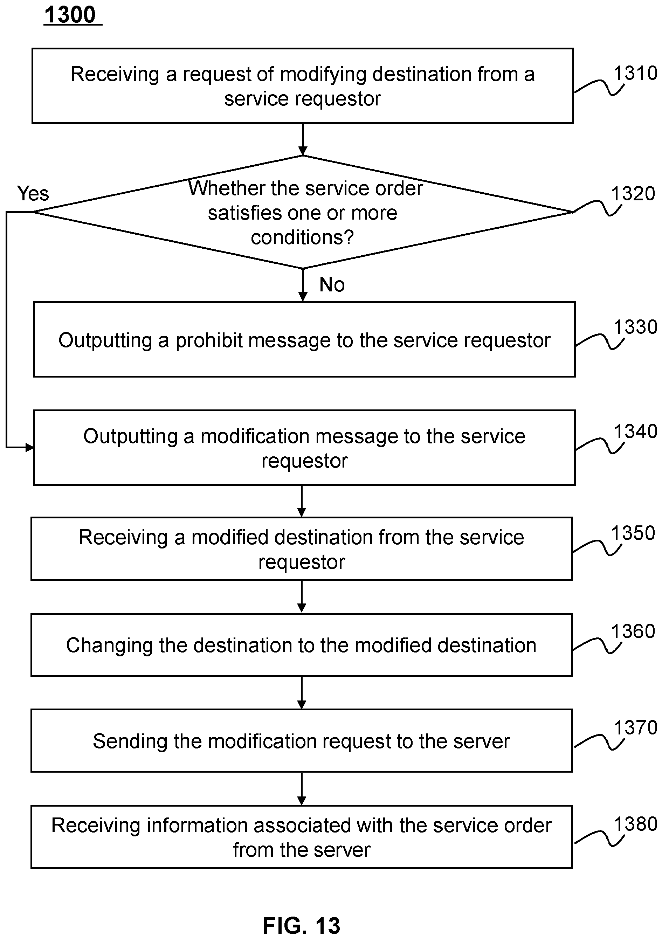

FIG. 13 is a flowchart of an exemplary process 1300 for modifying a destination of a service order according to some embodiments of the present disclosure. In some embodiments, one or more operations in the process 1300 may be implemented in the on-demand service system 100 illustrated in FIG. 1. For example, one or more operations in the process 1300 may be stored in the memory 360 and/or the storage 390 as a form of instructions, and invoked and/or executed by the requestor terminal 130 (e.g., the CPU 340 of the requestor terminal 130).

In 1310, the CPU 340 (or the communication module 910) may receive a request of modifying destination from a service requestor.

In some embodiments, the request of modifying destination may include a request sent by the service requestor to inform the requestor terminal 130 that the service requestor wants to change the destination of the service order. In some embodiments, upon receiving the request of modifying destination, the requestor terminal 130 may activate a preprocess operation of the destination modification. The preprocess operation may include a processing procedure to determine whether the request is reasonable. For example, if the CPU 340 determines that the service requestor is the first time to change the destination according to the processing procedure, the request may be determined as reasonable. If the CPU 340 determines that the service requestor changes the destination too frequently (e.g., the service requestor send the request for modifying destination for the fifth time), the request may be determined as unreasonable. In some embodiments, if the preprocess operation determines that the request is reasonable, a destination modification process (e.g., the process 1200) may be activated and the service requestor may modify the destination of the service order. Otherwise, the request of modifying destination may be determined to be invalid and the service requestor may not be allowed to modify the destination of the service order.

In 1320, the CPU 340 (or the service order modifying module 930) may determine whether the service order satisfies one or more conditions.

In some embodiments, the one or more conditions may include a condition that the modification times of the destination is no greater than a predetermined value, a condition that the electronic device does not receive a prohibit instruction that prevents the modification of the destination from the server 110, or the like, or any combination thereof. The predetermined value may be a positive integer including, for example, 1, 2, 3, or the like. In some embodiments, the predetermined value may be stored in the storage 390 of the requestor terminal 130 or a storage (e.g., the storage device 160, the ROM 230, the RAM 240) of the on-demand service system 100, or may be adjusted according to different applications scenarios. The prohibit instruction may be generated after the server 110 receives a rejection request that refuses to modify destination from the service provider of the provider terminal 140. In some embodiments, the requestor terminal 130 may conduct the rest of operations of the process 1300 according to the determination result. If the service order satisfies the one or more conditions, the process 1300 may proceed to 1340. Otherwise, the process1300 may proceed to 1330. For example, if the modification times of the destination is no greater than a predetermined value, the requestor terminal 130 may execute 1340. If the modification times of the destination is greater than a predetermined value, the requestor terminal 130 may execute 1330. As another example, if the service provider of the service order has accepted a carpooling order, or the service provider has pre-configured the provider terminal 140 to refuse modify destination, the provider terminal 140 may send a rejection request to the server 110. The server 110 may send a prohibit instruction to the requestor terminal 130 after receiving the rejection request. Then the requestor terminal 130 may execute 1340 if no prohibit instruction is received, and may execute 1330 if a prohibit instruction is received. As still another example, if the modification times of the destination is no greater than a predetermined value and no prohibit instruction is received, the requestor terminal 130 may execute 1340. If modification times of the destination is greater than a predetermined value, or a prohibit instruction is received, the requestor terminal 130 may execute 1330.

In 1330, the CPU 340 (or the service order modifying module 930) may output a prohibit message to the service requestor by displaying the prohibit message on the display 320.

In some embodiments, the prohibit message may include an interaction interface to remind the service requestor that the destination modification is denied. The interface may remind the service requestor by displaying a text information. For example, the interaction interface may display the text information that modification of the destination is denied. In some embodiments, the requestor terminal 130 may remind the service requestor by voice broadcasting and/or mechanical vibration.

In 1340, the CPU 340 (or the service order modifying module 930) may output a modification message to the service requestor.

In some embodiments, the modification message may include an interaction interface through which the service requestor can input information into the requestor terminal 130. For example, the service requestor may input a destination that the service requestor wants to change to the requestor terminal 130 via the interaction interface. In some embodiments, the requestor terminal 130 may remind the service requestor that the modification message has been outputted on the display 320 by a reminding method. The reminding method may include voice broadcast, mechanical vibration, display brightness change, or the like, or any combination thereof. For example, the requestor terminal 130 may remind the service requestor to input information via the modification message by broadcasting a reminding voice to the service requestor.

In 1350, CPU 340 (or the communication module 910) may receive a modified destination of the service order from the service requestor.

In some embodiments, the modified destination may refer to a new destination that used to replace the original destination of the service order. For example, if the service requestor sends a modification request to change the destination from an office building to a gym, the gym may be designated as the modified destination. In some embodiments, the service requestor may input the modified destination via the modification message by using various methods including a text input method, a voice input method, a location probe movement method, or the like, or any combination thereof. For example, the service requestor may send the modified destination to the requestor terminal 130 by inputting the text information of the modified destination. As another example, the service requestor may send the modified destination to the requestor terminal 130 by inputting a voice message associated with the modified destination such as "the modified destination is the central park." As still another example, the service requestor may send the modified destination to the requestor terminal 130 by moving the location probe to the modified destination on an electronic map.

In 1360, the CPU 340 (or the service order modifying module 930) may change the destination (or the original destination) of the service order to the modified destination. The destination of the service order may be replaced by the modified destination as the final destination of the service order.

In 1370, the CPU 340 (or the communication module 910) may send the modification request to the server 110. In some embodiments, the modification request may include the modified destination, the original destination, the request time of the modification request, or the like, or any combination thereof. The CPU 340 (or the communication module 908) may send the modification request to the server 110 via the network 120.

In 1380, the CPU 340 (or the communication module 910) may receive information associated with the service order from the server 110.

In some embodiments, the information associated with the service order may include a remaining route from the present location of the service requestor to the modified destination associated with the service order, an estimated distance from the present location of the service requestor to the modified destination, an estimated time from the present location of the service requestor to the modified destination, an estimated price of the remaining route, at least one suggested navigation route between the present location of the service requestor and the modified destination, a destination associated with the service order, information of successive order allocation for the service order, information of abnormal expenses interception for the service order, or the like, or any combination thereof. Meanwhile, the requestor terminal 130 may receive a modification instruction from the server 110. The modification instruction may instruct the requestor terminal 130 (or the service order modifying module 930) to update information related to the destination. In some embodiments, the requestor terminal 130 may display information related to the destination of the service order for the service requestor in real time. The information related to the destination may include a remaining route from the present location of the service requestor to the destination of the service order, an estimated distance from the present location of the service requestor to the destination, an estimated time from the present location to the destination, an estimated price of the remaining route, or the like, or any combination thereof. Since the destination has been changed to the modified destination, the requestor terminal 130 (or the service order modifying module 930) may update the information related to the destination of the service based on the information associated with the service order under the modification instruction received from the server 110.

For example, one or more other optional operations (e.g., a storing operation, a preprocessing operation) may be added elsewhere in the process 1300. As another example, all the operations in the process 1300 may be implemented in a computer-readable medium including a set of instructions. The instructions may be transmitted in a form of electronic current or electronic signals.

Having thus described the basic concepts, it may be rather apparent to those skilled in the art after reading this detailed disclosure that the foregoing detailed disclosure is intended to be presented by way of example only and is not limiting.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment," "one embodiment," or "an alternative embodiment" in various portions of this specification are not necessarily all referring to the same embodiment.

Further, it will be appreciated by one skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "block," "module," "engine," "unit," "component," or "system." Furthermore, aspects of the present disclosure may take the form of a computer program product embodied in one or more computer readable media having computer readable program code embodied thereon.

A computer readable signal medium may include a propagated data signal with computer readable program code embodied therein, for example, in baseband or as part of a carrier wave. Such a propagated signal may take any of a variety of forms, including electro-magnetic, optical, or the like, or any suitable combination thereof. A computer readable signal medium may be any computer readable medium that is not a computer readable storage medium and that may communicate, propagate, or transport a program for use by or in connection with an instruction execution system, apparatus, or device. Program code embodied on a computer readable signal medium may be transmitted using any appropriate medium, including wireless, wireline, optical fiber cable, RF, or the like, or any suitable combination of the foregoing.

Computer program code for carrying out operations for aspects of the present disclosure may be written in any combination of one or more programming languages, including an object oriented programming language such as Java, Scala, Smalltalk, Eiffel, JADE, Emerald, C++, C#, VB. NET, Python or the like, conventional procedural programming languages, such as the "C" programming language, Visual Basic, Fortran 1703, Perl, COBOL 1702, PHP, ABAP, dynamic programming languages such as Python, Ruby and Groovy, or other programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a software as a service (SaaS).

Although implementation of various components described above may be embodied in a hardware device, it may also be implemented as a software-only solution-e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim.

## Claims

1. A system (100) for providing navigation route for an on-demand service, comprising:
at least one computer-readable storage medium (160) including a set of instructions; and
at least one processor (112) configured to communicate with the at least one computer-readable storage medium (160), wherein when executing the set of instructions, the system (100) is directed to:
receive a service order from a service requestor, wherein the service order is an online transportation service request order and comprises a departure location and a destination;
obtain a location of a service provider accepting the service order;
generate one or more candidate navigation routes based on the service order and the location of the service provider, wherein the one or more candidate navigation routes include a passenger pick-up navigation route between the location of the service provider and the departure location;
send the one or more candidate navigation routes to the service requestor;
obtain a candidate navigation route selected by the service requestor from the one or more candidate navigation routes;
send the selected candidate navigation route to the service provider.

2. The system of claim 1, wherein the one or more candidate navigation routes further comprise:
a service order navigation route between the destination of the service order and the location of the service provider.

3. The system of claim 1 or 2, wherein to obtain a candidate navigation route selected by the service requestor, the system is further directed to:
generate a first prompt of selection instruction used to direct a requestor terminal (130) associated with the service requestor to generate a navigation route selection window and/or a reminder to remind the service requestor to select a navigation route from the one or more candidate navigation routes;
send the first prompt to the service requestor; and
obtain determination information related to the candidate navigation route selected by the service requestor.

4. The system of claim 3, wherein the system is further directed to:
send a second prompt of wait instruction to the service provider before obtaining the determination information of the service requestor, wherein the second prompt of wait instruction is used to direct a provider terminal (140) associated with the service provider to generate a waiting window and remind the service provider to wait for the candidate navigation route selected by the service requestor and forwarded by the system.

5. The system of any one of claims 1-4, wherein the system is further directed to:
obtain a modification request relating to the destination from the service requestor;
determine a modified destination based on the modification request; and
change the destination to the modified destination.

6. The system of claim 5, wherein the system is further directed to:
obtain a present location of the service requestor; and
generate information associated with the service order based on the modified destination and the present location.

7. The system of claim 6, wherein the information associated with the service order comprises at least one of:
a remaining route from the present location of the service requestor to the modified destination associated with the service order,
an estimated distance from the present location of the service requestor to the modified destination,
an estimated time from the present location to the modified destination, an estimated price of the remaining route, or
at least one suggested navigation route between the present location and the modified destination.

8. The system of any one of claims 5-7, wherein the system is further directed to:
send a third prompt of modification instruction to the service requestor or the service provider, wherein the third prompt is used to direct a requestor terminal (130) associated with the service requestor or a provider terminal (140) associated with the service provider to generate a waiting window and remind the service provider to update the information associated with the service order comprising the modified destination.

9. A method for providing navigation route for an on-demand service implemented on at least one computing device (200) each of which has at least one processor (112) and storage (160), the method comprising:
receiving a service order from a service requestor, wherein the service order is an online transportation service request order and comprises a departure location and a destination
obtaining, by the at least one processor, a location of a service provider accepting the service order;
generating, by the at least one processor, one or more candidate navigation routes based on the service order and the location of the service provider, wherein the one or more candidate navigation routes include a passenger pick-up navigation route between the location of the service provider and the departure location;
sending, by the at least one processor, the one or more candidate navigation routes to the service requestor;
obtaining, by the at least one processor, a candidate navigation route selected by the service requestor from the one or more candidate navigation routes; and
sending, by the at least one processor, the selected candidate navigation route to the service provider.

10. The method of claim 9, wherein obtaining a candidate navigation route selected by the service requestor further comprises:
generating, by the at least one processor, a first prompt of selection instruction used to direct a requestor terminal (130) associated with the service requestor to generate a navigation route selection window and/or a reminder to remind the service requestor to select a navigation route from the one or more candidate navigation routes;
sending, by the at least one processor, the first prompt to the service requestor; and
obtaining, by the at least one processor, determination information related to the candidate navigation route selected by the service requestor.

11. The method of any one of claims 9-10, further comprising:
obtaining, by the at least one processor, a modification request relating to the destination from the service requestor;
determining, by the at least one processor, a modified destination based on the modification request; and
changing, by the at least one processor, the destination to the modified destination.

12. The method of claim 11, further comprising:
obtaining, by the at least one processor, a present location of the service requestor; and
generating, by the at least one processor, information associated with the service order based on the modified destination and the present location.

13. A computer-readable storage medium (160) comprising instructions executable by an electronic device (200), wherein when executed by the electronic device (200), the instructions direct the electronic device (200) to:
receive a service order from a service requestor, wherein the service order is an online transportation service request order and comprises a departure location and a destination;
obtain a location of a service provider accepting the service order;
generate one or more candidate navigation routes based on the service order and the location of the service provider, the one or more candidate navigation routes include a passenger pick-up navigation route between the location of the service provider and the departure location;
send the one or more candidate navigation routes to the service requestor;
obtain a candidate navigation route selected by the service requestor from the one or more candidate navigation routes; and
send the selected candidate navigation route to the service provider.

## Patentansprüche

1. System (100) zum Bereitstellen einer Navigationsroute für einen On-Demand-Dienst, umfassend:
mindestens ein computerlesbares Speichermedium (160), das einen Satz von Anweisungen einschließt; und
mindestens einen Prozessor (112), der konfiguriert ist, um mit dem mindestens einen computerlesbaren Speichermedium (160) zu kommunizieren, wobei beim Ausführen des Satzes von Anweisungen das System (100) angewiesen wird zum:
Empfangen eines Dienstauftrags von einem Dienstanforderer, wobei der Dienstauftrag ein Online-Transportdienstanforderungsauftrag ist und einen Abfahrtsort und ein Ziel umfasst;
Erhalten des Standorts eines Dienstanbieters, der den Dienstauftrag annimmt;
Generieren einer oder mehrerer Kandidatennavigationsrouten basierend auf dem Dienstauftrag und dem Standort des Dienstanbieters, wobei die eine oder mehreren Kandidatennavigationsrouten eine Fahrgastabholnavigationsroute zwischen dem Standort des Dienstanbieters und dem Abfahrtsort einschließen;
Senden der einen oder mehreren Kandidatennavigationsrouten an den Dienstanforderer;
Erhalten einer vom Dienstanforderer ausgewählten Kandidatennavigationsroute aus der einen oder den mehreren Kandidatennavigationsrouten;
Senden der ausgewählten Kandidatennavigationsroute an den Dienstanbieter.

2. System nach Anspruch 1, wobei die eine oder die mehreren Kandidatennavigationsrouten weiter umfassen:
eine Dienstauftragsnavigationsroute zwischen dem Ziel des Dienstauftrags und dem Standort des Dienstanbieters.

3. System nach Anspruch 1 oder 2, wobei das Erhalten einer vom Dienstanforderer ausgewählten Kandidatennavigationsroute weiter angewiesen wird zum:
Generieren einer ersten Aufforderung zur Auswahlanweisung, die verwendet wird, um ein Anfordererendgerät (130), das dem Dienstanforderer zugeordnet ist, anzuweisen, ein Navigationsroutenauswahlfenster und/oder eine Erinnerung zu generieren, um den Dienstanforderer daran zu erinnern, eine Navigationsroute aus der einen oder den mehreren Kandidatennavigationsrouten auszuwählen;
Senden der ersten Aufforderung an den Dienstanforderer; und
Erhalten von Bestimmungsinformationen in Bezug auf die vom Dienstanforderer ausgewählte Kandidatennavigationsroute.

4. System nach Anspruch 3, wobei das System weiter angewiesen wird zum:
Senden einer zweiten Aufforderung zur Warteanweisung an den Dienstanbieter, bevor die Bestimmungsinformationen des Dienstanforderers erhalten werden, wobei die zweite Aufforderung zur Warteanweisung verwendet wird, um ein dem Dienstanbieter zugeordnetes Anbieterendgerät (140) anzuweisen, ein Wartefenster zu generieren und den Dienstanbieter daran zu erinnern, auf die vom Dienstanforderer ausgewählte und vom System weitergeleitete Kandidatennavigationsroute zu warten.

5. System nach einem der Ansprüche 1-4, wobei das System weiter angewiesen wird zum:
Erhalten einer Änderungsanforderung in Bezug auf das Ziel vom Dienstanforderer;
Bestimmen eines geänderten Ziels basierend auf der Änderungsanforderung; und
Ändern des Ziels in das geänderte Ziel.

6. System nach Anspruch 5, wobei das System weiter angewiesen wird zum:
Erhalten eines gegenwärtigen Standorts des Dienstanforderers; und
Generieren von Informationen, die dem Dienstauftrag zugeordnet sind, basierend auf dem geänderten Ziel und dem gegenwärtigen Standort.

7. System nach Anspruch 6, wobei die dem Dienstauftrag zugeordneten Informationen mindestens eines umfassen aus:
einer verbleibenden Route vom gegenwärtigen Standort des Dienstanforderers zum geänderten Ziel, das dem Dienstauftrag zugeordnet ist,
einer geschätzten Entfernung vom gegenwärtigen Standort des Dienstanforderers zum geänderten Ziel,
einer geschätzten Zeit vom gegenwärtigen Standort bis zum geänderten Ziel, einem geschätzten Preis für die verbleibende Route, oder
mindestens einer vorgeschlagenen Navigationsroute zwischen dem gegenwärtigen Standort und dem geänderten Ziel.

8. System nach einem der Ansprüche 5-7, wobei das System weiter angewiesen wird zum:
Senden einer dritten Aufforderung zur Änderungsanweisung an den Dienstanforderer oder den Dienstanbieter, wobei die dritte Aufforderung verwendet wird, um ein Anfordererendgerät (130), das dem Dienstanforderer zugeordnet ist, oder ein Anbieterendgerät (140), das dem Dienstanbieter zugeordnet ist, anzuweisen, ein Wartefenster zu generieren und den Dienstanbieter daran zu erinnern, die Informationen zu aktualisieren, die dem Dienstauftrag zugeordnet sind, der das geänderte Ziel umfasst.

9. Verfahren zum Bereitstellen einer Navigationsroute für einen On-Demand-Dienst, das auf mindestens einer Rechenvorrichtung (200) implementiert ist, von denen jede mindestens einen Prozessor (112) und einen Speicher (160) aufweist, wobei das Verfahren umfasst:
Empfangen eines Dienstauftrags von einem Dienstanforderer, wobei der Dienstauftrag ein Online-Transportdienstanforderungsauftrag ist und einen Abfahrtsort und ein Ziel umfasst;
Erhalten, durch den mindestens einen Prozessor, eines Standortes eines Dienstanbieters, der den Dienstauftrag annimmt;
Generieren einer oder mehrerer Kandidatennavigationsrouten basierend auf dem Dienstauftrag und dem Standort des Dienstanbieters durch den mindestens einen Prozessor, wobei die eine oder die mehreren Kandidatennavigationsrouten eine Fahrgastabholnavigationsroute zwischen dem Standort des Dienstanbieters und dem Abfahrtsort einschließen;
Senden, durch den mindestens einen Prozessor, der einen oder der mehreren Kandidatennavigationsrouten an den Dienstanforderer;
Erhalten, durch den mindestens einen Prozessor, einer Kandidatennavigationsroute, die von dem Dienstanforderer aus der einen oder den mehreren Kandidatennavigationsrouten ausgewählt wird; und
Senden, durch den mindestens einen Prozessor, der ausgewählten Kandidatennavigationsroute an den Dienstanbieter.

10. Verfahren nach Anspruch 9, wobei das Erhalten einer vom Dienstanforderer ausgewählten Kandidatennavigationsroute weiter umfasst:
Generieren, durch den mindestens einen Prozessor, einer ersten Aufforderung zur Auswahlanweisung, die verwendet wird, um ein Anfordererendgerät (130), das dem Dienstanforderer zugeordnet ist, anzuweisen, ein Navigationsroutenauswahlfenster und/oder eine Erinnerung zu generieren, um den Dienstanforderer daran zu erinnern, eine Navigationsroute aus der einen oder den mehreren Kandidatennavigationsrouten auszuwählen;
Senden, durch den mindestens einen Prozessor, der ersten Aufforderung an den Dienstanforderer; und
Erhalten, durch den mindestens einen Prozessor, von Bestimmungsinformationen in Bezug auf die vom Dienstanforderer ausgewählte Kandidatennavigationsroute.

11. Verfahren nach einem der Ansprüche 9-10, weiter umfassend:
Erhalten, durch den mindestens einen Prozessor, einer Änderungsanforderung in Bezug auf das Ziel vom Dienstanforderer;
Bestimmen, durch den mindestens einen Prozessor, eines geänderten Ziels basierend auf der Änderungsanforderung; und
Ändern, durch den mindestens einen Prozessor, des Ziels in das geänderte Ziel.

12. Verfahren nach Anspruch 11, weiter umfassend:
Erhalten, durch den mindestens einen Prozessor, eines gegenwärtigen Standorts des Dienstanforderers; und
Generieren, durch den mindestens einen Prozessor, von Informationen, die dem Dienstauftrag zugeordnet sind, basierend auf dem geänderten Ziel und dem gegenwärtigen Standort.

13. Computerlesbares Speichermedium (160), das Anweisungen umfasst, die von einer elektronischen Vorrichtung (200) ausführbar sind, wobei die Anweisungen, wenn sie von der elektronischen Vorrichtung (200) ausgeführt werden, die elektronische Vorrichtung (200) anweisen zum:
Empfangen eines Dienstauftrags von einem Dienstanforderer, wobei der Dienstauftrag ein Online-Transportdienstanforderungsauftrag ist und einen Abfahrtsort und ein Ziel umfasst;
Erhalten des Standorts eines Dienstanbieters, der den Dienstauftrag annimmt;
Generieren einer oder mehrerer Kandidatennavigationsrouten basierend auf dem Dienstauftrag und dem Standort des Dienstanbieters, wobei die eine oder die mehreren Kandidatennavigationsrouten eine Fahrgastabholnavigationsroute zwischen dem Standort des Dienstanbieters und dem Abfahrtsort einschließen;
Senden der einen oder der mehreren Kandidatennavigationsrouten an den Dienstanforderer;
Erhalten einer vom Dienstanforderer ausgewählten Kandidatennavigationsroute aus der einen oder den mehreren Kandidatennavigationsrouten; and
Senden der ausgewählten Kandidatennavigationsroute an den Dienstanbieter.

## Revendications

1. Système (100) pour fournir un itinéraire de navigation pour un service à la demande, comprenant :
au moins un support de stockage lisible par ordinateur (160) incluant un ensemble d'instructions ; et
au moins un processeur (112) configuré pour communiquer avec le au moins un support de stockage lisible par ordinateur (160), dans lequel, lors de l'exécution de l'ensemble d'instructions, le système (100) est amené à :
recevoir une commande de service depuis un demandeur de service, dans lequel la commande de service est une commande de demande de service de transport en ligne et comprend un emplacement de départ et une destination ;
obtenir un emplacement d'un fournisseur de service acceptant la commande de service ;
générer un ou plusieurs itinéraires de navigation candidats sur la base de la commande de service et de l'emplacement du fournisseur de service, dans lequel les un ou plusieurs itinéraires de navigation candidats incluent un itinéraire de navigation de prise en charge de passager entre l'emplacement du fournisseur de service et l'emplacement de départ ;
envoyer les un ou plusieurs itinéraires de navigation candidats au demandeur de service ;
obtenir un itinéraire de navigation candidat sélectionné par le demandeur de service parmi les un ou plusieurs itinéraires de navigation candidats ;
envoyer l'itinéraire de navigation candidat sélectionné au fournisseur de service.

2. Système selon la revendication 1, dans lequel les un ou plusieurs itinéraires de navigation candidats comprennent en outre :
un itinéraire de navigation de commande de service entre la destination de la commande de service et l'emplacement du fournisseur de service.

3. Système selon la revendication 1 ou 2, dans lequel, pour obtenir un itinéraire de navigation candidat sélectionné par le demandeur de service, le système est en outre amené à :
générer une première invite d'instruction de sélection utilisée pour ordonner à une borne de demandeur (130) associée au demandeur de service de générer une fenêtre de sélection d'itinéraire de navigation et/ou un rappel pour rappeler au demandeur de service de sélectionner un itinéraire de navigation parmi les un ou plusieurs itinéraires de navigation candidats ;
envoyer la première invite au demandeur de service ; et
obtenir des informations de détermination relatives à l'itinéraire de navigation candidat sélectionné par le demandeur de service.

4. Système selon la revendication 3, dans lequel le système est en outre amené à :
envoyer une deuxième invite d'instruction d'attente au fournisseur de service avant d'obtenir les informations de détermination du demandeur de service, dans lequel la deuxième invite d'instruction d'attente est utilisée pour ordonner à une borne de fournisseur (140) associée au fournisseur de service de générer une fenêtre d'attente et de rappeler au fournisseur de service d'attendre l'itinéraire de navigation candidat sélectionné par le demandeur de service et transféré par le système.

5. Système selon l'une quelconque des revendications 1-4, dans lequel le système est en outre amené à :
obtenir une demande de modification relative à la destination de la part du demandeur de service ;
déterminer une destination modifiée sur la base de la demande de modification ; et
modifier la destination en la destination modifiée.

6. Système selon la revendication 5, dans lequel le système est en outre amené à :
obtenir un emplacement actuel du demandeur de service ; et
générer des informations associées à la commande de service sur la base de la destination modifiée et de l'emplacement actuel.

7. Système selon la revendication 6, dans lequel les informations associées à la commande de service comprennent au moins l'un parmi :
un itinéraire restant depuis l'emplacement actuel du demandeur de service jusqu'à la destination modifiée associée à la commande de service,
une distance estimée depuis l'emplacement actuel du demandeur de service jusqu'à la destination modifiée,
une durée estimée depuis l'emplacement actuel jusqu'à la destination modifiée,
un prix estimé de l'itinéraire restant, ou
au moins un itinéraire de navigation suggéré entre l'emplacement actuel et la destination modifiée.

8. Système selon l'une quelconque des revendications 5-7, dans lequel le système est en outre amené à :
envoyer une troisième invite d'instruction de modification au demandeur de service ou au fournisseur de service, dans lequel la troisième invite est utilisée pour ordonner à une borne de demandeur (130) associée au demandeur de service ou à une borne de fournisseur (140) associé au fournisseur de service de générer une fenêtre d'attente et de rappeler au fournisseur de service de mettre à jour les informations associées à la commande de service comprenant la destination modifiée.

9. Procédé de fourniture d'un itinéraire de navigation pour un service à la demande mis en œuvre sur au moins un dispositif informatique (200), dont chacun présente au moins un processeur (112) et un dispositif de stockage (160), le procédé comprenant les étapes consistant à :
recevoir une commande de service depuis un demandeur de service, dans lequel la commande de service est une commande de demande de service de transport en ligne et comprend un emplacement de départ et une destination ;
obtenir, par le au moins un processeur, un emplacement d'un fournisseur de service acceptant la commande de service ;
générer, par le au moins un processeur, un ou plusieurs itinéraires de navigation candidats sur la base de la commande de service et de l'emplacement du fournisseur de service, dans lequel les un ou plusieurs itinéraires de navigation candidats incluent un itinéraire de navigation de prise en charge de passager entre l'emplacement du fournisseur de service et l'emplacement de départ ;
envoyer, par le au moins un processeur, les un ou plusieurs itinéraires de navigation candidats au demandeur de service ;
obtenir, par le au moins un processeur, un itinéraire de navigation candidat sélectionné par le demandeur de service parmi les un ou plusieurs itinéraires de navigation candidats ; et
envoyer, par le au moins un processeur, l'itinéraire de navigation candidat sélectionné au fournisseur de service.

10. Procédé selon la revendication 9, dans lequel l'étape consistant à obtenir un itinéraire de navigation candidat sélectionné par le demandeur de service comprend en outre les étapes consistant à :
générer, par le au moins un processeur, une première invite d'instruction de sélection utilisée pour ordonner à une borne de demandeur (130) associée au demandeur de service de générer une fenêtre de sélection d'itinéraire de navigation et/ou un rappel pour rappeler au demandeur de service de sélectionner un itinéraire de navigation parmi les un ou plusieurs itinéraires de navigation candidats ;
envoyer, par le au moins un processeur, la première invite au demandeur de service ; et
obtenir, par le au moins un processeur, des informations de détermination relatives à l'itinéraire de navigation candidat sélectionné par le demandeur de service.

11. Procédé selon l'une quelconque des revendications 9-10, comprenant en outre les étapes consistant à :
obtenir, par le au moins un processeur, une demande de modification relative à la destination de la part du demandeur de service ;
déterminer, par le au moins un processeur, une destination modifiée sur la base de la demande de modification ; et
modifier, par le au moins un processeur, la destination en la destination modifiée.

12. Procédé selon la revendication 11, comprenant en outre les étapes consistant à :
obtenir, par le au moins un processeur, un emplacement actuel du demandeur de service ; et
générer, par le au moins un processeur, des informations associées à la commande de service sur la base de la destination modifiée et de l'emplacement actuel.

13. Support de stockage lisible par ordinateur (160) comprenant des instructions exécutables par un dispositif électronique (200), dans lequel, lorsqu'elles sont exécutées par le dispositif électronique (200), les instructions ordonnent au dispositif électronique (200) de :
recevoir une commande de service depuis un demandeur de service, dans lequel la commande de service est une commande de demande de service de transport en ligne et comprend un emplacement de départ et une destination ;
obtenir un emplacement d'un fournisseur de service acceptant la commande de service ;
générer un ou plusieurs itinéraires de navigation candidats sur la base de la commande de service et de l'emplacement du fournisseur de service, les un ou plusieurs itinéraires de navigation candidats incluent un itinéraire de navigation de prise en charge de passager entre l'emplacement du fournisseur de service et l'emplacement de départ ;
envoyer les un ou plusieurs itinéraires de navigation candidats au demandeur de service ;
obtenir un itinéraire de navigation candidat sélectionné par le demandeur de service parmi les un ou plusieurs itinéraires de navigation candidats ; et
envoyer l'itinéraire de navigation candidat sélectionné au fournisseur de service.
